(19) **Europäisches Patentamt**
**European Patent Office**
**Office européen des brevets**

(11) **EP 4 513 811 A1**

(12) **EUROPEAN PATENT APPLICATION**
published in accordance with Art. 153(4) EPC

(43) Date of publication:
**26.02.2025 Bulletin 2025/09**

(21) Application number: **23792180.4**

(22) Date of filing: **19.04.2023**

(51) International Patent Classification (IPC):
*H04L 5/00* (2006.01)     *H04L 1/08* (2006.01)
*H04B 7/0413* (2017.01)     *H04B 7/06* (2006.01)
*H04L 5/14* (2006.01)

(52) Cooperative Patent Classification (CPC):
**H04B 7/0413; H04B 7/06; H04L 1/08; H04L 5/00;
H04L 5/14**

(86) International application number:
**PCT/KR2023/005318**

(87) International publication number:
**WO 2023/204606 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.04.2022 KR 20220047920**

(71) Applicant: **LG Electronics Inc.**
**Yeongdeungpo-gu
Seoul 07336 (KR)**

(72) Inventors:
• **KIM, Kyuseok**
**Seoul 06772 (KR)**
• **GO, Seongwon**
**Seoul 06772 (KR)**
• **KANG, Jiwon**
**Seoul 06772 (KR)**

(74) Representative: **Plasseraud IP**
**104 Rue de Richelieu
CS92104
75080 Paris Cedex 02 (FR)**

(54) **APPARATUS AND METHOD FOR PERFORMING TRANSMISSION AND RECEPTION OF SRS ON BASIS OF PLURALITY OF SYMBOLS IN WIRELESS COMMUNICATION SYSTEM**

(57) According to various embodiments of the present disclosure, there is provided a method of operating a user equipment (UE) in a wireless communication system. The method comprises receiving, from a base station, sounding reference signal (SRS) configuration information including a number of repeated transmissions 'repetitionFactor' of an SRS within a slot and a number of symbols 'nrofSymbols' related to the SRS within the slot, determining a number of consecutive symbols 'N' related to a transmission of the SRS and a number of times for a repetition transmission of the SRS as one or more of L or M based on the repetitionFactor, repeating an operation of transmitting the SRS to the base station every N consecutive symbols in a first frequency domain, L times, and repeating an operation of transmitting the SRS to the base station every N consecutive symbols in a second frequency domain, L or M times. The transmission of the SRS is related to multiple antenna ports within the UE, and time resource domains related to the multiple antenna ports do not overlap with each other and are allocated within the N consecutive symbols.

[FIG. 8]

**Description**

[Technical Field]

The present disclosure relates to a device and method for performing transmission and reception of a sounding reference signal (SRS) based on a plurality of symbols in a wireless communication system. More particularly, the present disclosure relates to a device and method for transmitting and receiving an SRS by applying N-symbol based time division multiplexing (TDM) and/or time division-orthogonal cover code (TD-OCC) in a wireless communication system.

[Background Art]

In the 3GPP Release 18 MIMO SRS discussion, a discussion is scheduled to introduce 8-port sounding reference signal (SRS) transmission. In the current standard, it is defined that SRS transmission of 1, 2 and 4 ports is possible and all ports can be transmitted within a single symbol. Among various port multiplexing methods, a method of applying N-symbol based time division multiplexing (TDM) and/or time division-orthogonal cover code (TD-OCC) may be considered.

The present disclosure proposes a method that can solve a problem that may occur when applying N-symbol based TDM and/or TD-OCC.

[Disclosure]

[Technical Problem]

In order to solve the above-described problems, the present disclosure provides a device and method for performing transmission and reception of a sounding reference signal (SRS) based on a plurality of symbols in a wireless communication system.

The present disclosure also provides a device and method for transmitting and receiving an SRS by applying N-symbol based time division multiplexing (TDM) and/or time division-orthogonal cover code (TD-OCC) in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system, the method comprising receiving, from a base station, sounding reference signal (SRS) configuration information including a number of repeated transmissions 'repetitionFactor' of an SRS within a slot and a number of symbols 'nrofSymbols' related to the SRS within the slot, determining a number of consecutive symbols 'N' related to a transmission of the SRS and a number of times for a repetition transmission of the SRS as one or more of L or M based on the repetitionFactor, repeating an operation of transmitting the SRS to the base station every N consecutive symbols in a first frequency domain, L times, and repeating an operation of transmitting the SRS to the base station every N consecutive symbols in a second frequency domain, L or M times, wherein the transmission of the SRS is related to multiple antenna ports within the UE, and wherein time resource domains related to the multiple antenna ports do not overlap with each other and are allocated within the N consecutive symbols.

According to various embodiments of the present disclosure, there is provided a method of operating a base station in a wireless communication system, the method comprising transmitting, to a user equipment (UE), sounding reference signal (SRS) configuration information including a number of repeated transmissions 'repetitionFactor' of an SRS within a slot and a number of symbols 'nrofSymbols' related to the SRS within the slot, repeating an operation of receiving the SRS from the UE every N consecutive symbols in a first frequency domain, L times, and repeating an operation of receiving the SRS from the UE every N consecutive symbols in a second frequency domain, L or M times, wherein the N is a number of consecutive symbols related to a transmission of the SRS, wherein the L and the M are a number of times for a repetition transmission of the SRS based on the repetitionFactor, wherein a reception of the SRS is related to multiple antenna ports within the base station, and wherein time resource domains related to the multiple antenna ports do not overlap with each other and are allocated within the N consecutive symbols.

According to various embodiments of the present disclosure, there is provided a user equipment (UE) in a wireless communication system, the UE comprising a transceiver, at least one processor, and at least one memory operably connectable to the at least one processor and configured to store instructions performing operations based on being executed by the at least one processor, wherein the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and configured to store instructions performing operations based on being executed by the at least one processor, wherein the operations comprise all steps of a method of operating the base station according to various embodiments of the present disclosure.

According to various embodiments of the present disclosure, there is provided a control device controlling a user equipment (UE) in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a control device controlling a base station in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a user equipment (UE) according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a base station according to various embodiments of the present disclosure.

[Advantageous Effects]

In order to solve the above-described problems, the present disclosure can provide a device and method for performing transmission and reception of a sounding reference signal (SRS) based on a plurality of symbols in a wireless communication system.

The present disclosure can also provide a device and method for transmitting and receiving an SRS by applying N-symbol based time division multiplexing (TDM) and/or time division-orthogonal cover code (TD-OCC) in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of an uplink (UL) beam management (BM) using a sounding reference signal (SRS) in a system applicable to the present disclosure.

FIG. 3 illustrates an example of an uplink (UL) beam management (BM) using a sounding reference signal (SRS) in a system applicable to the present disclosure.

FIG. 4 illustrates an example of a procedure related to downlink transmission and reception in a system applicable to the present disclosure.

FIG. 5 illustrates an example of a procedure related to uplink transmission and reception in a system applicable to the present disclosure.

FIG. 6 illustrates an example of SRS transmission performing frequency hopping in a system applicable to the present disclosure.

FIG. 7 illustrates an example of SRS transmission performing frequency hopping in a system applicable to the present disclosure.

FIG. 8 illustrates an example of SRS transmission performing frequency hopping in a system applicable to the present disclosure.

FIG. 9 illustrates an example of SRS transmission performing frequency hopping in a system applicable to the present disclosure.

FIG. 10 illustrates an example of SRS transmission performing frequency hopping in a system applicable to the present disclosure.

FIG. 11 illustrates an example of SRS transmission performing frequency hopping in a system applicable to the present disclosure.

FIG. 12 illustrates an example of SRS transmission performing frequency hopping in a system applicable to the present disclosure.

FIG. 13 illustrates an example of SRS transmission performing group/sequence hopping in a system applicable to the present disclosure.

FIG. 14 illustrates an example of SRS transmission performing group/sequence hopping in a system applicable to the present disclosure.

FIG. 15 illustrates a signal flowchart between a UE and a base station in a system applicable to the present disclosure.

FIG. 16 illustrates an example of an operation process of a UE in a system applicable to the present disclosure.

FIG. 17 illustrates an example of an operation process of a base station in a system applicable to the present disclosure.

FIG. 18 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

General Signal Transmission Method in 3GPP

Physical Channels and General Signal Transmission

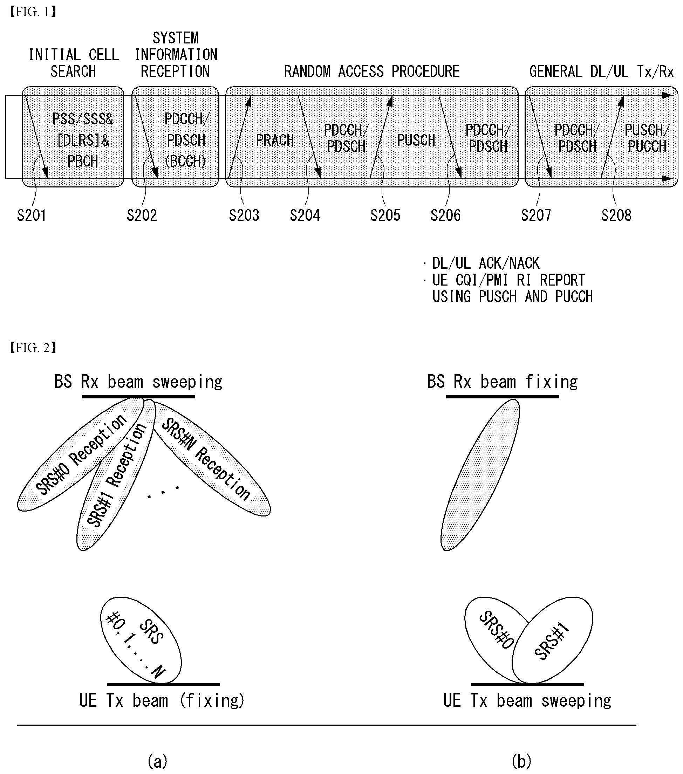

FIG. 1 illustrates physical channels used in a system applicable to the present disclosure and an example of a general signal transmission method using the physical channels. More specifically, FIG. 1 illustrates physical channels and general signal transmission used in the 3GPP system.

In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S201). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. The UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S202).

When there is no radio resource first accessing the eNB or for signal transmission, the UE may perform a random access procedure (RACH) to the eNB (S203 to S206). To this end, the UE may transmit a specific sequence to a preamble through a physical random access channel (PRACH) (S203 and S205) and receive a response message (Random Access Response (RAR) message) for the preamble through the PDCCH and a corresponding PDSCH. In the case of a contention based RACH, a Contention Resolution Procedure may be additionally performed (S206).

The UE that performs the above procedure may then perform PDCCH/PDSCH reception (S207) and Physical Uplink Shared Channel (PUSCH)/Physical Uplink Control Channel (PUCCH) transmission (S208) as a general uplink/-downlink signal transmission procedure. In particular, the UE may receive Downlink Control Information (DCI) through the PDCCH. Here, the DCI may include control information such as resource allocation information for the UE and formats may be differently applied according to a use purpose.

The control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., via the PUSCH and/or PUCCH.

Table 1 shows an example of the DCI format in the NR system.

[Table 1]

| DCI format | Usage |
| --- | --- |
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |

Referring to Table 1, DCI format 0_0 is used for scheduling of the PUSCH in one cell. Information included in the DCI format 0_0 is CRC scrambled and transmitted by C-RNTI or CS-RNTI or MCS-C-RNTI.

And, DCI format 0_1 is used to reserve the PUSCH in one cell. Information included in the DCI format 0_1 is CRC scrambled and transmitted by C-RNTI or CS-RNTI or SP-CSI-RNTI or MCS-C-RNTI.

DCI format 1_0 is used for scheduling of the PDSCH in one DL cell. Information included in the DCI format 1_0 is CRC scrambled and transmitted by C-RNTI or CS-RNTI or MCS-C-RNTI.

DCI format 1_1 is used for scheduling of the PDSCH in one cell. Information included in the DCI format 1_1 is CRC scrambled and transmitted by C-RNTI or CS-RNTI or MCS-C-RNTI. DCI format 2_1 is used to inform PRB(s) and OFDM symbol(s) that the UE may assume that transmission is not intended.

The following information included in the DCI format 2_1 is CRC scrambled and transmitted by INT-RNTI.

- preemption indication 1, preemption indication 2, ..., preemption indication N.

Technical Problem to be solved by the present disclosure

In the Release 18 MIMO SRS discussion, a discussion is scheduled to introduce 8-port SRS transmission. In the current standard, it is defined that SRS transmission of 1, 2 and 4 ports is possible and all ports can be transmitted within a single symbol. Among various port multiplexing methods, a method of applying N-symbol based TDM and/or TD-OCC may be considered. The present disclosure proposes a method that can solve a problem that may occur when applying N-symbol based TDM and/or TD-OCC.

In the present disclosure, '/' can be interpreted as when including all the contents separated by '/' (and), or when including only a part of the separated contents (or).

The configuration, operation and other features of the present disclosure will be understood by the embodiments of the present disclosure described with reference to the accompanying drawings.

Specification Related Operation

Quasi-Co Location (QCL)

The antenna port is defined so that a channel over which a symbol on an antenna port is conveyed can be inferred from a channel over which another symbol on the same antenna port is conveyed. When properties of a channel over which a symbol on one antenna port is conveyed can be inferred from a channel over which a symbol on another antenna port is conveyed, the two antenna ports may be considered as being in a quasi co-located or quasi co-location (QC/QCL) relationship.

The channel properties include one or more of delay spread, Doppler spread, frequency/Doppler shift, average received power, received timing/average delay, and spatial RX parameter. The spatial Rx parameter means a spatial (reception) channel property parameter such as an angle of arrival.

The UE may be configured with a list of up to M TCI-State configurations within the higher layer parameter PDSCH-Config to decode PDSCH according to a detected PDCCH with DCI intended for the corresponding UE and a given serving cell, where M depends on UE capability.

Each TCI-State contains parameters for configuring a quasi co-location relationship between one or two DL reference signals and the DM-RS ports of the PDSCH.

The quasi co-location relationship is configured by the higher layer parameter qcl-Type1 for the first DL RS and qcl-Type2 for the second DL RS (if configured). For the case of two DL RSs, the QCL types are not be the same, regardless of whether the references are to the same DL RS or different DL RSs.

The quasi co-location types corresponding to each DL RS are given by the higher layer parameter qcl-Type of QCL-Info and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, if a target antenna port is a specific NZP CSI-RS, the corresponding NZP CSI-RS antenna ports may be indicated/configured to be QCLed with a specific TRS in terms of QCL-TypeA and with a specific SSB in terms of QCL-TypeD. The UE receiving the indication/configuration may receive the corresponding NZP CSI-RS using the Doppler or delay value measured in the QCL-TypeA TRS and apply the Rx beam used for QCL-TypeD SSB reception to the reception of the corresponding NZP CSI-RS reception.

The UE may receive an activation command via MAC CE signaling used to map up to eight TCI states to the codepoint of the DCI field 'Transmission Configuration Indication'.

The standard contents related to the QCL described above can be as shown in Table 2 below (see, e.g. 3GPP TS 38.214. section 5.1.5.).

[Table 2]

| 5.1.5 Antenna ports quasi co-location |
| --- |

(continued)

The UE can be configured with a list of up to *M TCI-State* configurations within the higher layer parameter *PDSCH-Config* to decode PDSCH according to a detected PDCCH with DCI intended for the UE and the given serving cell, where M depends on the UE capability *maxNumberActiveTCI-PerBWP*. Each *TCI-State* contains parameters for configuring a quasi co-location relationship between one or two downlink reference signals and the DM-RS ports of the PDSCH. The quasi co-location relationship is configured by the higher layer parameter *qcl-Type1* for the first DL RS, and *qcl-Type2* for the second DL RS (if configured). For the case of two DL RSs, the QCL types shall not be the same, regardless of whether the references are to the same DL RS or different DL RSs. The quasi co-location types corresponding to each DL RS are given by the higher layer parameter *qcl-Type* in *QCL-Info* and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

The UE receives an activation command [10, TS 38.321] used to map up to 8 TCI states to the codepoints of the DCI field *'Transmission Configuration Indication'.* When the HARQ-ACK corresponding to the PDSCH carrying the activation command is transmitted in slot n, the indicated mapping between TCI states and codepoints of the DCI field *'Transmission Configuration Indication'* should be applied starting from slot $n + 3N_{slot}^{subframe,\mu}+1$. After a UE receives an initial higher layer configuration of TCI states and before reception of the activation command, the UE may assume that the DM-RS ports of PDSCH of a serving cell are quasi co-located with the SS/PBCH block determined in the initial access procedure with respect to 'QCL-TypeA', and when applicable, also with respect to'QCL-TypeD'.

If a UE is configured with the higher layer parameter *tci-PresentInDCI* that is set as 'enabled' for the CORESET scheduling the PDSCH, the UE assumes that the TCI field is present in the DCI format 1_1 of the PDCCH transmitted on the CORESET. If *tci-PresentInDCI* is not configured for the CORESET scheduling the PDSCH or the PDSCH is scheduled by a DCI format 1_0, and the time offset between the reception of the DL DCI and the corresponding PDSCH is equal to or greater than a threshold *timeDurationForQCL,* where the threshold is based on reported UE capability [13, TS 38.306], for determining PDSCH antenna port quasi co-location, the UE assumes that the TCI state or the QCL assumption for the PDSCH is identical to the TCI state or QCL assumption whichever is applied for the CORESET used for the PDCCH transmission.

If the *tci-PresentInDCI* is set as 'enabled', the TCI field in DCI in the scheduling component carrier points to the activated TCI states in the scheduled component carrier or DL BWP and when the PDSCH is scheduled by DCI format 1_1, the UE shall use the *TCI-State* according to the value of the *'Transmission Configuration Indication'* field in the detected PDCCH with DCI for determining PDSCH antenna port quasi co-location. The UE may assume that the DM-RS ports of PDSCH of a serving cell are quasi co-located with the RS(s) in the TCI state with respect to the QCL type parameter(s) given by the indicated TCI state if the time offset between the reception of the DL DCI and the corresponding PDSCH is equal to or greater than a threshold *timeDurationForQCL,* where the threshold is based on reported UE capability [13, TS 38.306]. When the UE is configured with a single slot PDSCH, the indicated TCI state should be based on the activated TCI states in the slot with the scheduled PDSCH. When the UE is configured with a multi-slot PDSCH, the indicated TCI state should be based on the activated TCI states in the first slot with the scheduled PDSCH, and UE shall expect the activated TCI states are the same across the slots with the scheduled PDSCH. When the UE is configured with CORESET associated with a search space set for cross-carrier scheduling, the UE expects *tci-PresentInDci* is set as 'enabled' for the CORESET, and if one or more of the TCI states configured for the serving cell scheduled by the search space set contains 'QCL-TypeD', the UE expects the time offset between the reception of the detected PDCCH in the search space set and the corresponding PDSCH is larger than or equal to the threshold *timeDurationForQCL.*

For both the cases when *tci-PresentInDCI* is set to 'enabled' and *tci-PresentInDCI* is not configured in RRC connected mode, if the offset between the reception of the DL DCI and the corresponding PDSCH is less than the threshold *timeDurationForQCL,* the UE may assume that the DM-RS ports of PDSCH of a serving cell are quasi co-located with the RS(s) with respect to the QCL parameter(s) used for PDCCH quasi co-location indication of the CORESET associated with a monitored search space with the lowest *CORESET-ID* in the latest slot in which one or more CORESETs within the active BWP of the serving cell are monitored by the UE. In this case, if the 'QCL-TypeD' of the PDSCH DM-RS is different from that of the PDCCH DM-RS with which they overlap in at least one symbol, the UE is expected to prioritize the reception of PDCCH associated with that CORESET. This also applies to the intra-band CA case (when PDSCH and the CORESET are in different component carriers). If none of configured TCI states contains 'QCL-TypeD', the UE shall obtain the other QCL assumptions from the indicated TCI states for its scheduled PDSCH irrespective of the time offset between the reception of the DL DCI and the corresponding PDSCH.

For a periodic CSI-RS resource in a *NZP-CSI-RS-ResourceSet* configured with higher layer parameter *trs-Info,* the UE shall expect that a TCI-State indicates one of the following quasi co-location type(s):

- 'QCL-TypeC' with an SS/PBCH block and, when applicable, 'QCL-TypeD' with the same SS/PBCH block, or
- 'QCL-TypeC' with an SS/PBCH block and, when applicable,'QCL-TypeD' with a CSI-RS resource in an *NZP-CSI-RS-ResourceSet* configured with higher layer parameter *repetition,* or

For an aperiodic CSI-RS resource in a *NZP-CSI-RS-ResourceSet* configured with higher layer parameter *trs-Info,* the UE shall expect that a *TCI-State* indicates 'QCL-TypeA' with a periodic CSI-RS resource in a *NZP-CSI-RS-ResourceSet* configured with higher layer parameter *trs-Info* and, when applicable,'QCL-TypeD' with the same periodic CSI-RS resource.

For a CSI-RS resource in a *NZP-CSI-RS-ResourceSet* configured without higher layer parameter *trs-Info* and without the higher layer parameter *repetition,* the UE shall expect that a *TCI-State* indicates one of the following quasi co-location type(s):

- 'QCL-TypeA' with a CSI-RS resource in a *NZP-CSI-RS-ResourceSet* configured with higher layer parameter *trs-Info* and, when applicable, 'QCL-TypeD' with the same CSI-RS resource, or
- 'QCL-TypeA' with a CSI-RS resource in a *NZP-CSI-RS-ResourceSet* configured with higher layer parameter *trs-Info* and, when applicable, 'QCL-TypeD' with an SS/PBCH block , or
- 'QCL-TypeA' with a CSI-RS resource in a *NZP-CSI-RS-ResourceSet* configured with higher layer parameter *trs-Info* and, when applicable, 'QCL-TypeD' with a CSI-RS resource in a *NZP-CSI-RS-ResourceSet* configured with higher layer parameter *repetition,* or
- 'QCL-TypeB' with a CSI-RS resource in a *NZP-CSI-RS-ResourceSet* configured with higher layer parameter *trs-Info* when 'QCL-TypeD' is not applicable.

For a CSI-RS resource in a *NZP-CSI-RS-ResourceSet* configured with higher layer parameter *repetition,* the UE shall expect that a *TCI-State* indicates one of the following quasi co-location type(s):

- 'QCL-TypeA' with a CSI-RS resource in a *NZP-CSI-RS-ResourceSet* configured with higher layer parameter *trs-Info* and, when applicable, 'QCL-TypeD' with the same CSI-RS resource, or
- 'QCL-TypeA' with a CSI-RS resource in a *NZP-CSI-RS-ResourceSet* configured with higher layer parameter *trs-Info* and, when applicable, 'QCL-TypeD' with a CSI-RS resource in a *NZP-CSI-RS-ResourceSet* configured with higher layer parameter *repetition,* or
- 'QCL-TypeC' with an SS/PBCH block and, when applicable, 'QCL-TypeD' with the same SS/PBCH block.

For the DM-RS of PDCCH, the UE shall expect that a *TCI-State* indicates one of the following quasi co-location type(s):

- 'QCL-TypeA' with a CSI-RS resource in a *NZP-CSI-RS-ResourceSet* configured with higher layer parameter *trs-Info* and, when applicable, 'QCL-TypeD' with the same CSI-RS resource, or
- 'QCL-TypeA' with a CSI-RS resource in a *NZP-CSI-RS-ResourceSet* configured with higher layer parameter *trs-Info* and, when applicable, 'QCL-TypeD' with a CSI-RS resource in an *NZP-CSI-RS-ResourceSet* configured with higher layer parameter *repetition,* or
- 'QCL-TypeA' with a CSI-RS resource in a *NZP-CSI-RS-ResourceSet* configured without higher layer parameter trs-Info and without higher layer parameter *repetition* and, when applicable, 'QCL-TypeD' with the same CSI-RS resource.

For the DM-RS of PDSCH, the UE shall expect that a *TCI-State* indicates one of the following quasi co-location type(s):

- 'QCL-TypeA' with a CSI-RS resource in a *NZP-CSI-RS-ResourceSet* configured with higher layer parameter *trs-Info* and, when applicable, 'QCL-TypeD' with the same CSI-RS resource, or

(continued)

> - 'QCL-TypeA' with a CSI-RS resource in a *NZP-CSI-RS-ResourceSet* configured with higher layer parameter *trs-Info* and, when applicable, 'QCL-TypeD' with a CSI-RS resource in an *NZP-CSI-RS-ResourceSet* configured with higher layer parameter *repetition,or*
>
> - QCL-TypeA' with a CSI-RS resource in a *NZP-CSI-RS-ResourceSet* configured without higher layer param eter *trs-Info* and without higher layer parameter *repetition* and, when applicable, 'QCL-TypeD' with the same CSI-RS resource.

Uplink Beam Management (UL BM)

FIG. 2 illustrates an example of an uplink beam management (UL BM) using a sounding reference signal (SRS) in a system applicable to the present disclosure.

A UL BM may be configured such that beam reciprocity (or beam correspondence) between a Tx beam and an Rx beam is established or not established depending on the UE implementation. If the beam reciprocity between the Tx beam and the Rx beam is established in both a base station and a UE, a UL beam pair may be adjusted via a DL beam pair. However, if the beam reciprocity between the Tx beam and the Rx beam is not established in any one of the base station and the UE, a process of determining the UL beam pair is necessary separately from the DL beam pair determination.

Even if both the base station and the UE maintain the beam correspondence, the base station may use a UL BM procedure for determining the DL Tx beam even if the UE does not request a report of a (preferred) beam.

The UM BM may be performed via beamformed UL SRS transmission, and whether to apply UL BM of an SRS resource set is configured by the (higher layer parameter) usage. If the usage is set to 'BeamManagement (BM)', only one SRS resource may be transmitted to each of a plurality of SRS resource sets in a given time instant.

The UE may be configured with one or more sounding reference symbol (SRS) resource sets configured by (higher layer parameter) SRS-ResourceSet (via higher layer signaling, RRC signaling, etc.). For each SRS resource set, the UE may be configured with $K \geq 1$ SRS resources (higher later parameter SRS-resource), where K is a natural number, and a maximum value of K is indicated by SRS_capability.

In the same manner as the DL BM, the UL BM procedure may be divided into a UE's Tx beam sweeping and a base station's Rx beam sweeping.

FIG. 2 illustrates an example of an UL BM procedure using an SRS. More specifically, (a) of FIG. 2 illustrates an Rx beam determination procedure of a base station, and (b) FIG. 2 illustrates a Tx beam sweeping procedure of a UE.

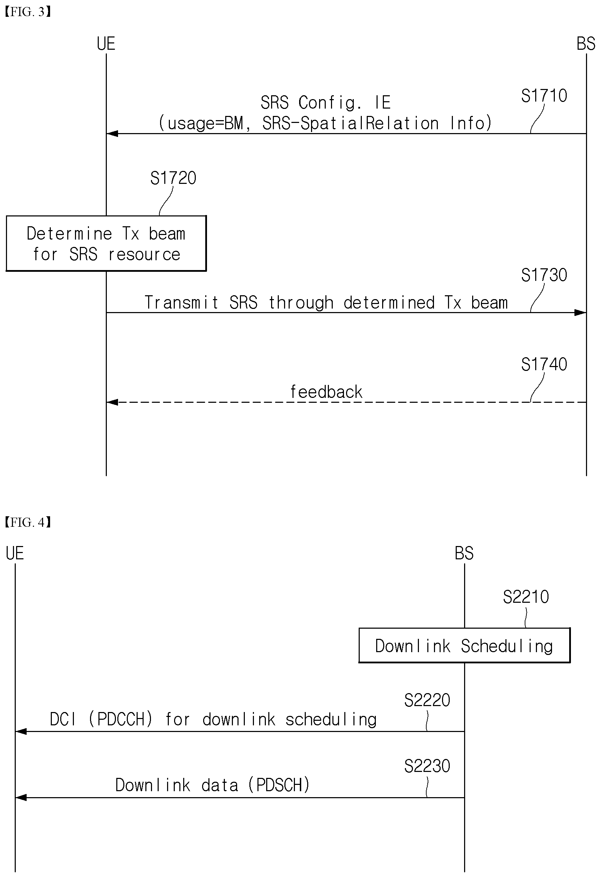

FIG. 3 illustrates an example of an UL BM using an SRS in a system applicable to the present disclosure. Specifically, FIG. 3 is a flow chart illustrating an example of an UL BM procedure using an SRS.

- The UE receives, from the base station, RRC signaling (e.g., SRS-Config IE) including (higher layer parameter) usage parameter set to 'beam management' in S1710.

Table 3 shows an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

【Table 3】

```
-- ASN1START

-- TAG-MAC-CELL-GROUP-CONFIG-START


SRS-Config ::=                     SEQUENCE {
    srs-ResourceSetToReleaseList         SEQUENCE (SIZE(1..maxNrofSRS-
ResourceSets)) OF SRS-ResourceSetId        OPTIONAL,  -- Need N

    srs-ResourceSetToAddModList        SEQUENCE (SIZE(1..maxNrofSRS-ResourceSets))
OF SRS-ResourceSet             OPTIONAL,  -- Need N


    srs-ResourceToReleaseList          SEQUENCE (SIZE(1..maxNrofSRS-Resources))
OF SRS-ResourceId            OPTIONAL,  -- Need N

    srs-ResourceToAddModList           SEQUENCE (SIZE(1..maxNrofSRS-Resources)) OF
SRS-Resource               OPTIONAL,  -- Need N


    tpc-Accumulation                   ENUMERATED {disabled}
                              OPTIONAL,  -- Need S

    ...

}



SRS-ResourceSet ::=              SEQUENCE {
    srs-ResourceSetId                  SRS-ResourceSetId,

    srs-ResourceIdList                 SEQUENCE (SIZE(1..maxNrofSRS-
ResourcesPerSet)) OF SRS-ResourceId    OPTIONAL,  -- Cond Setup


    resourceType                       CHOICE {
        aperiodic                        SEQUENCE {
            aperiodicSRS-ResourceTrigger       INTEGER (1..maxNrofSRS-
TriggerStates-1),

            csi-RS                           NZP-CSI-RS-ResourceId
                        OPTIONAL,  -- Cond NonCodebook

            slotOffset                         INTEGER (1..32)
                              OPTIONAL,  -- Need S

            ...
```

```
        },

        semi-persistent                           SEQUENCE {

                associatedCSI-RS                    NZP-CSI-RS-ResourceId
                            OPTIONAL, -- Cond NonCodebook

                ...

        },

        periodic                              SEQUENCE {

                associatedCSI-RS                    NZP-CSI-RS-ResourceId
                            OPTIONAL, -- Cond NonCodebook

                ...

        }

    },

    usage                                   ENUMERATED {beamManagement, codebook,
nonCodebook, antennaSwitching},

    alpha                                 Alpha
                            OPTIONAL, -- Need S

    p0                                      INTEGER (-202..24)
                                OPTIONAL, -- Cond Setup

    pathlossReferenceRS                  CHOICE {

        ssb-Index                          SSB-Index,

        csi-RS-Index                       NZP-CSI-RS-ResourceId



SRS-SpatialRelationInfo ::=       SEQUENCE {

    servingCellId               ServCellIndex
    OPTIONAL,  -- Need S

    referenceSignal             CHOICE {

        ssb-Index                       SSB-Index,

        csi-RS-Index                    NZP-CSI-RS-ResourceId,

        srs                             SEQUENCE {

                resourceId                  SRS-ResourceId,

                uplinkBWP                   BWP-Id
```

```
        }

    }

}



    SRS-ResourceId ::=                    INTEGER (0..maxNrofSRS-Resources-1)
```

In Table 3, usage refers to a higher layer parameter to indicate whether the SRS resource set is used for beam management or is used for codebook based or non-codebook based transmission. The usage parameter corresponds to L1 parameter 'SRS-SetUse'. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.

- The UE determines the Tx beam for the SRS resource to be transmitted based on SRS-SpatialRelation Info contained in the SRS-Config IE in S1720. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.
- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS through the determined Tx beam in S1730.

More specifically, for P-SRS with 'SRS-ResourceConfigType' set to 'periodic':

i) if SRS-SpatialRelationInfo is set to 'SSB/PBCH', the UE transmits the corresponding SRS resource with the same spatial domain transmission filter (or generated from the corresponding filter) as the spatial domain Rx filter used for the reception of the SSB/PBCH; or
ii) if SRS-SpatialRelationInfo is set to 'CSI-RS', the UE transmits the SRS resource with the same spatial domain transmission filter used for the reception of the periodic CSI-RS or SP CSI-RS, or
iii) if SRS-SpatialRelationInfo is set to 'SRS', the UE transmits the SRS resource with the same spatial domain transmission filter used for the transmission of the periodic SRS.

Even if 'SRS-ResourceConfigType' is set to 'SP-SRS' or 'AP-SRS', the beam determination and transmission operations may be applied similar to the above.

- Additionally, the UE may receive or may not receive feedback for the SRS from the base station, as in the following three cases in S1740.

i) If Spatial_Relation_Info is configured for all the SRS resources within the SRS resource set, the UE transmits the SRS with the beam indicated by the base station. For example, if the Spatial_Relation_Info indicates all the same SSB, CRI, or SRI, the UE repeatedly transmits the SRS with the same beam. This case corresponds to FIG. 2(a) as the usage for the base station to select the Rx beam.
ii) The Spatial_Relation_Info may not be configured for all the SRS resources within the SRS resource set. In this case, the UE may perform transmission while freely changing SRS beams. That is, this case corresponds to FIG. 2(b) as the usage for the UE to sweep the Tx beam.
iii) The Spatial_Relation_Info may be configured for only some SRS resources within the SRS resource set. In this case, the UE may transmit the configured SRS resources with the indicated beam, and transmit the SRS resources, for which Spatial_Relation_Info is not configured, by randomly applying the Tx beam.

Downlink Transmission and Reception Operation

FIG. 4 illustrates an example of a procedure related to downlink transmission and reception in a system applicable to the present disclosure.

- A base station schedules downlink transmission such as frequency/time resource, transmission layer, downlink precoder, and MCS in S2201. In particular, the base station may determine a beam for PDSCH transmission to a UE through the operations described above.
- The UE receives, from the base station, downlink control information (DCI) for downlink scheduling (i.e., including scheduling information of PDSCH) on a PDCCH in S2202.

DCI format 1_0 or 1_1 may be used for downlink scheduling, and the DCI format 1_1 particularly includes the following information: an identifier for DCI formats, a bandwidth part indicator, frequency domain resource assignment, time domain resource assignment, a PRB bundling size indicator, a rate matching indicator, ZP CSI-RS trigger, antenna port(s), a transmission configuration indication (TCI), SRS request, and demodulation reference signal (DMRS) sequence initialization.

In particular, based on each state indicated in an antenna port(s) field, the number of DMRS ports may be scheduled, and single-user (SU)/multi-user (MU) transmission scheduling is also possible.

A TCI field consists of 3 bits, and QCL for DMRS is dynamically indicated by indicating up to 8 TCI states according to a TCI field value.

- The UE receives downlink data from the base station on the PDSCH in S2203.

If the UE detects PDCCH including DCI format 1_0 or 1_1, the UE decodes the PDSCH based on an indication for the DCI.

When the UE receives the PDSCH scheduled by DCI format 1, the UE may be configured with a DMRS configuration type by higher layer parameter 'dmrs-Type', and the DMRS type is used to receive the PDSCH. The UE may also be configured with the maximum number of front-loaded DMRS symbols for the PDSCH by higher layer parameter 'maxLength'

For DMRS configuration type 1, if a single codeword is scheduled and antenna ports mapped to indexes of {2, 9, 10, 11 or 30} are designated, or if two codewords are scheduled, the UE assumes that all remaining perpendicular antenna ports do not associate with PDSCH transmission to another UE.

Alternatively, for DMRS configuration type 2, if a single codeword is scheduled and antenna ports mapped to indexes of {2, 10 or 23} are designated, or if two codewords are scheduled, the UE assumes that all remaining perpendicular antenna ports do not associate with PDSCH transmission to another UE.

When the UE receives the PDSCH, the UE may assume a precoding granularity P' as consecutive resource blocks in the frequency domain, where P' may correspond to one value of {2, 4, wideband}.

If P' is determined as wideband, the UE does not expect to be scheduled with non-contiguous RBs and may assume that the same precoding is applied to assigned resources.

On the other hand, if P' is determined as one of {2, 4}, a precoding resource block group (PRG) is divided into P' consecutive PRBs. The number of actually consecutive PRBs in each PRG may be one or more. The UE may assume that the same precoding is applied to consecutive downlink PRBs in the PRG.

In order for the UE to determine a modulation order, a target code rate, and a transport block size within the PDSCH, the UE first reads 5-bit MCD field within DCI and determines the modulation order and the target code rate. Further, the UE reads a redundancy version field within the DCI and determines a redundancy version. The UE determines the transport block size using the number of layers and the total number of assigned PRBs before the rate matching.

Uplink Transmission and Reception Operation

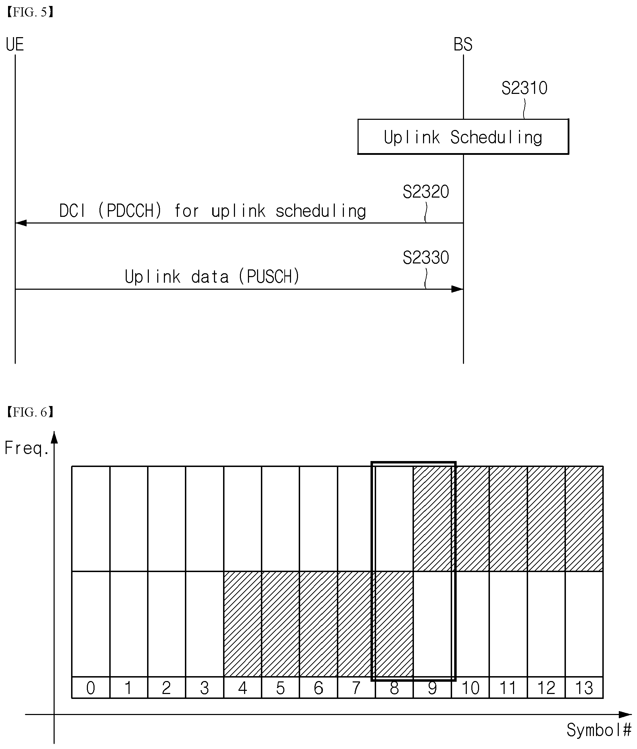

FIG. 5 illustrates an example of a procedure related to uplink transmission and reception in a system applicable to the present disclosure.

- A base station schedules uplink transmission such as frequency/time resource, transmission layer, uplink precoder, and MCS in S2301. In particular, the base station may determine a beam for PUSCH transmission to a UE through the operations described above.
- The UE receives, from the base station, DCI for uplink scheduling (i.e., including scheduling information of PUSCH) on a PDCCH in S2302.

DCI format 0_0 or 0_1 may be used for uplink scheduling, and the DCI format 0_1 particularly includes the following information: an identifier for DCI formats, UL/SUL (supplementary uplink) indicator, a bandwidth part indicator, frequency domain resource assignment, time domain resource assignment, a frequency hopping flag, a modulation and coding scheme (MCS), an SRS resource indicator (SRI), precoding information and number of layers, antenna port(s), SRS request, DMRS sequence initialization, and an uplink shared channel (UL-SCH) indicator.

In particular, SRS resources configured within a set of SRS resources associated with higher layer parameter 'usage' by an SRS resource indicator field may be indicated. 'spatialRelationInfo' may be configured for each SRS resource, and this value may be one of {CRI, SSB, SRI}.

- The UE transmits uplink data to the base station on the PUSCH in S2303.

If the UE detects PDCCH including the DCI format 0_0 or 0_1, the UE transmits the corresponding PUSCH based on an indication by the DCI.

Two types of transmission methods including codebook based transmission and non-codebook based transmission are supported for PUSCH transmission:

i) When higher layer parameter 'txConfig' is set to 'codebook', the UE is configured with the codebook based transmission. On the other hand, when the higher layer parameter 'txConfig' is set to 'nonCodebook', the UE is configured with the non-codebook based transmission. If the higher layer parameter 'txConfig' is not set, the UE does not expect to be scheduled by the DCI format 0_1. If the PUSCH is scheduled by the DCI format 0_0, the PUSCH transmission is based on a single antenna port.

For the codebook based transmission, the PUSCH may be scheduled in the DCI format 0_0, the DCI format 0_1, or semi-statically. If this PUSCH is scheduled by the DCI format 0_1, the UE determines a PUSCH transmission precoder based on an SRI from DCI, a transmit precoding matrix indicator (TPMI), and a transmission tank, as given by a SRS resource indicator field and a field of precoding information and number of layers. The TPMI is used to indicate a precoder that may be applied over an antenna port, and corresponds to SRS resource selected by the SRI when multiple SRS resources are configured. Alternatively, if a single SRS resource is configured, the TPMI is used to indicate a precoder that may be applied over an antenna port, and corresponds to the corresponding single SRS resource. A transmission precoder is selected from an uplink codebook having the same number of antenna ports as upper layer parameter 'nrofSRS-Ports'. When the UE is configured with the higher layer parameter 'txConfig' set to 'codebook', at least one SRS resource is configured to the UE. An SRI indicated in a slot n is associated with the latest transmission of SRS resource identified by the SRI, where the SRS resource precedes the PDCCH (i.e., slot n) carrying the SRI.

ii) For the non-codebook based transmission, the PUSCH may be scheduled in the DCI format 0_0, the DCI format 0_1, or semi-statically. When multiple SRS resources are configured, the UE may determine a PUSCH precoder and a transmission tank based on a wideband SRI, where the SRI is given by an SRS resource indicator within DCI, or given by upper layer parameter 'srs-ResourceIndicator'. The UE uses one SRS resource or multiple SRS resources for the SRS transmission, where the number of SRS resources may be configured for the simultaneous transmission within the same RB based on a UE capability. Only one SRS port is configured for each SRS resource. Only one SRS resource may be configured with the upper layer parameter 'usage' that is set to 'nonCodebook'. The maximum number of SRS resources that can be configured for the non-codebook based uplink transmission is 4. An SRI indicated in a slot n is associated with the latest transmission of SRS resource identified by the SRI, where the SRS transmission precedes the PDCCH (i.e., slot n) carrying the SRI.

Sounding Reference Signal (SRS)

6.4.1.4              Sounding reference signal

6.4.1.4.1              SRS resource

An SRS resource is configured by the *SRS-Resource* IE or the *SRS-PosResource* IE and consists of

- $N_{\text{ap}}^{\text{SRS}} \in \{1,2,4\}$ antenna ports $\{p_i\}_{i=0}^{N_{\text{ap}}^{\text{SRS}}-1}$, where the number of antenna ports is given by the higher layer parameter *nrofSRS-Ports* if configured, otherwise $N_{\text{ap}}^{\text{SRS}} = 1$, and $p_i = 1000 + i$ when the SRS resource is in a SRS resource set with higher-layer parameter *usage* in *SRS-ResourceSet* not set to 'nonCodebook', or determined according to [6, TS 38.214] when the SRS resource is in a SRS resource set with higher-layer parameter *usage* in *SRS-ResourceSet* set to 'nonCodebook'

- $N_{\text{symb}}^{\text{SRS}} \in \{1,2,4,8,10,12,14\}$ consecutive OFDM symbols given by the field *nrofSymbols* contained in the higher layer parameter *resourceMapping*

- $l_0$, the starting position in the time domain given by $l_0 = N_{\text{symb}}^{\text{slot}} - 1 - l_{\text{offset}}$ where the offset $l_{\text{offset}} \in \{0,1,...,13\}$ counts symbols backwards from the end of the slot and is given by the field *startPosition* contained in the higher layer parameter *resourceMapping* and $l_{\text{offset}} \geq N_{\text{symb}}^{\text{SRS}} - 1$

- $k_0$, the frequency-domain starting position of the sounding reference signal

6.4.1.4.2              Sequence generation

The sounding reference signal sequence for an SRS resource shall be generated according to

$$r^{(p_i)}(n,l') = r_{u,v}^{(\alpha_i,\delta)}(n)$$

$$0 \leq n \leq M_{\text{sc},b}^{\text{SRS}} - 1$$

$$l' \in \left\{0,1,...,N_{\text{symb}}^{\text{SRS}} - 1\right\}$$

where $M_{\text{sc},b}^{\text{SRS}}$ is given by clause 6.4.1.4.3, $r_{u,v}^{(\alpha,\delta)}(n)$ is given by clause 5.2.2 with $\delta = \log_2(K_{\text{TC}})$ and the transmission comb number $K_{\text{TC}} \in \{2,4,8\}$ is contained in the higher-layer parameter *transmissionComb*. The cyclic shift $\alpha_i$ for antenna port $p_i$ is given as

$$\alpha_i = 2\pi \frac{n_{\text{SRS}}^{\text{cs},i}}{n_{\text{SRS}}^{\text{cs,max}}}$$

$$n_{\text{SRS}}^{\text{cs},i} = \begin{cases} \left(n_{\text{SRS}}^{\text{cs}} + \frac{n_{\text{SRS}}^{\text{cs,max}}\lfloor(p_i-1000)/2\rfloor}{N_{\text{ap}}^{\text{SRS}}/2}\right) \bmod n_{\text{SRS}}^{\text{cs,max}} & \text{if } N_{\text{ap}}^{\text{SRS}} = 4 \text{ and } n_{\text{SRS}}^{\text{cs,max}}{=}6 \\ \left(n_{\text{SRS}}^{\text{cs}} + \frac{n_{\text{SRS}}^{\text{cs,max}}(p_i-1000)}{N_{\text{ap}}^{\text{SRS}}}\right) \bmod n_{\text{SRS}}^{\text{cs,max}} & \text{otherwise} \end{cases},$$

where $n_{\text{SRS}}^{\text{cs}} \in \left\{0,1,...,n_{\text{SRS}}^{\text{cs,max}} - 1\right\}$ is contained in the higher layer parameter *transmissionComb*. The maximum number of cyclic shifts $n_{\text{SRS}}^{\text{cs,max}}$ are given by Table 6.4.1.4.2-1.

The sequence group $u = \left(f_{\text{gh}}\left(n_{\text{s,f}}^{\mu},l'\right) + n_{\text{ID}}^{\text{SRS}}\right) \bmod 30$ and the sequence number $v$ in clause 5.2.2 depends on the higher-layer parameter *groupOrSequenceHopping* in the *SRS-Resource* IE or the *SRS-PosResource* IE. The SRS sequence identity $n_{\text{ID}}^{\text{SRS}}$ is given by the higher layer parameter *sequenceId* in the *SRS-Resource* IE, in which case $n_{\text{ID}}^{\text{SRS}} \in \{0, 1, ..., 1023\}$, or the

*SRS-PosResource-r16* IE, in which case $n_{\text{ID}}^{\text{SRS}} \in \{0, 1, \dots, 65535\}$. The quantity $l' \in \{0, 1, \dots, N_{\text{symb}}^{\text{SRS}} - 1\}$ is the OFDM symbol number within the SRS resource.

- if *groupOrSequenceHopping* equals 'neither', neither group, nor sequence hopping shall be used and

$$f_{\text{gh}}\left(n_{\text{s,f}}^{\mu}, l'\right) = 0$$
$$v = 0$$

- if *groupOrSequenceHopping* equals 'groupHopping', group hopping but not sequence hopping shall be used and

$$f_{\text{gh}}\left(n_{\text{s,f}}^{\mu}, l'\right) = \left(\sum_{m=0}^{7} c\left(8\left(n_{\text{s,f}}^{\mu} N_{\text{symb}}^{\text{slot}} + l_0 + l'\right) + m\right) \cdot 2^m\right) \mod 30$$
$$v = 0$$

where the pseudo-random sequence $c(i)$ is defined by clause 5.2.1 and shall be initialized with $c_{\text{init}} = n_{\text{ID}}^{\text{SRS}}$ at the beginning of each radio frame.

- if *groupOrSequenceHopping* equals 'sequenceHopping', sequence hopping but not group hopping shall be used and

$$f_{\text{gh}}\left(n_{\text{s,f}}^{\mu}, l'\right) = 0$$
$$v = \begin{cases} c\left(n_{\text{s,f}}^{\mu} N_{\text{symb}}^{\text{slot}} + l_0 + l'\right) & M_{\text{sc},b}^{\text{SRS}} \geq 6N_{\text{sc}}^{\text{RB}} \\ 0 & \text{otherwise} \end{cases}$$

where the pseudo-random sequence $c(i)$ is defined by clause 5.2.1 and shall be initialized with $c_{\text{init}} = n_{\text{ID}}^{\text{SRS}}$ at the beginning of each radio frame.

**Table 6.4.1.4.2-1: Maximum number of cyclic shifts $n_{\text{SRS}}^{\text{cs,max}}$ as a function of $K_{\text{TC}}$.**

| $K_{\text{TC}}$ | $n_{\text{SRS}}^{\text{cs,max}}$ |
|---|---|
| 2 | 8 |
| 4 | 12 |
| 8 | 6 |

6.4.1.4.3         Mapping to physical resources

When SRS is transmitted on a given SRS resource, the sequence $r^{(p_i)}(n, l')$ for each OFDM symbol $l'$ and for each of the antenna ports of the SRS resource shall be multiplied with the amplitude scaling factor $\beta_{\text{SRS}}$ in order to conform to the transmit power specified in [5, 38.213] and mapped in sequence starting with $r^{(p_i)}(0, l')$ to resource elements $(k, l)$ in a slot for each of the antenna ports $p_i$ according to

$$a_{K_{\text{TC}}k' + k_0^{(p_i)}, l' + l_0}^{(p_i)} = \begin{cases} \dfrac{1}{\sqrt{N_{\text{ap}}}} \beta_{\text{SRS}} r^{(p_i)}(k', l') & k' = 0, 1, \dots, M_{\text{sc},b}^{\text{SRS}} - 1 \quad l' = 0, 1, \dots, N_{\text{symb}}^{\text{SRS}} - 1 \\ 0 & \text{otherwise} \end{cases}$$

The length of the sounding reference signal sequence is given by

$$M_{sc,b}^{SRS} = m_{SRS,b} N_{sc}^{RB} / (K_{TC} P_F)$$

where $m_{SRS,b}$ is given by a selected row of Table 6.4.1.4.3-1 with $b = B_{SRS}$ where $B_{SRS} \in \{0,1,2,3\}$ is given by the field *b-SRS* contained in the higher-layer parameter *freqHopping* if configured, otherwise $B_{SRS} = 0$. The row of the table is selected according to the index $C_{SRS} \in \{0,1,...,63\}$ given by the field *c-SRS* contained in the higher-layer parameter *freqHopping*. The quantity $P_F$ is given by the higher-layer parameter *FreqScalingFactor* if configured, otherwise $P_F = 1$. When *FreqScalingFactor* is configured, the UE expects the length of the SRS sequence to be a multiple of 6.

The frequency-domain starting position $k_0^{(p_i)}$ is defined by

$$k_0^{(p_i)} = \bar{k}_0^{(p_i)} + n_{offset}^{FH} + n_{offset}^{RPFS}$$

where

$$\bar{k}_0^{(p_i)} = n_{shift} N_{sc}^{RB} + \left( k_{TC}^{(p_i)} + k_{offset}^{l'} \right) \bmod K_{TC}$$

$$k_{TC}^{(p_i)} = \begin{cases} (\bar{k}_{TC} + K_{TC}/2) \bmod K_{TC} & \text{if } N_{ap}^{SRS} = 4, p_i \in \{1001, 1003\}, \text{and } n_{SRS}^{cs,max} = 6 \\ (\bar{k}_{TC} + K_{TC}/2) \bmod K_{TC} & \text{if } N_{ap}^{SRS} = 4, p_i \in \{1001, 1003\}, \text{and } n_{SRS}^{cs} \in \{n_{SRS}^{cs,max}/2, ..., n_{SRS}^{cs,max} - 1\} \\ \bar{k}_{TC} & \text{otherwise} \end{cases}$$

$$n_{offset}^{FH} = \sum_{b=0}^{B_{SRS}} m_{SRS,b} N_{sc}^{RB} n_b$$

$$n_{offset}^{RPFS} = N_{sc}^{RB} m_{SRS,B_{SRS}} \left( (k_F + k_{hop}) \bmod P_F \right) / P_F$$

and

-   $k_F \in \{0, 1, ..., P_F - 1\}$ is given by the higher-layer parameter *StartRBIndex* if configured, otherwise $k_F = 0$;

-   $k_{hop}$ is given by Table 6.4.1.4.3-3 with

$$\bar{k}_{hop} = \left\lfloor \frac{n_{SRS}}{\prod_{b'=b_{hop}}^{B_{SRS}} N_{b'}} \right\rfloor \bmod P_F$$

$$N_{b_{hop}} = 1$$

if the higher-layer parameter *EnableStartRBHopping* is configured, otherwise $k_{hop} = 0$.

If $N_{BWP}^{start} \leq n_{shift}$ the reference point for $k_0^{(p_i)} = 0$ is subcarrier 0 in common resource block 0, otherwise the reference point is the lowest subcarrier of the BWP.

If the SRS is configured by the IE *SRS-PosResource*, the quantity $k_{offset}^{l'}$ is given by Table 6.4.1.4.3-2, otherwise $k_{offset}^{l'} = 0$.

The frequency domain shift value $n_{shift}$ adjusts the SRS allocation with respect to the reference point grid and is contained in the higher-layer parameter *freqDomainShift* in the *SRS-Resource* IE or the *SRS-PosResource* IE. The transmission comb offset $\bar{k}_{TC} \in \{0, 1, ..., K_{TC} - 1\}$ is contained in the higher-layer parameter *transmissionComb* in the *SRS-Resource* IE or the *SRS-PosResource* IE and $n_b$ is a frequency position index.

Frequency hopping of the sounding reference signal is configured by the parameter $b_{\text{hop}} \in \{0,1,2,3\}$, given by the field *b-hop* contained in the higher-layer parameter *freqHopping* if configured, otherwise $b_{\text{hop}} = 0$.

If $b_{\text{hop}} \geq B_{\text{SRS}}$, frequency hopping is disabled and the frequency position index $n_b$ remains constant (unless re-configured) and is defined by

$$n_{\text{b}} = \lfloor 4n_{\text{RRC}} / m_{\text{SRS},b} \rfloor \bmod N_{\text{b}}$$

for all $N_{\text{symb}}^{\text{SRS}}$ OFDM symbols of the SRS resource. The quantity $n_{\text{RRC}}$ is given by the higher-layer parameter *freqDomainPosition* if configured, otherwise $n_{\text{RRC}} = 0$, and the values of $m_{\text{SRS},b}$ and $N_{\text{b}}$ for $b = B_{\text{SRS}}$ are given by the selected row of Table 6.4.1.4.3-1 corresponding to the configured value of $C_{\text{SRS}}$.

If $b_{\text{hop}} < B_{\text{SRS}}$, frequency hopping is enabled and the frequency position indices $n_b$ are defined by

$$n_b = \begin{cases} \lfloor 4n_{\text{RRC}}/m_{\text{SRS},b} \rfloor \bmod N_{\text{b}} & b \leq b_{\text{hop}} \\ (F_b(n_{\text{SRS}}) + \lfloor 4n_{\text{RRC}}/m_{\text{SRS},b} \rfloor) \bmod N_{\text{b}} & \text{otherwise} \end{cases}$$

where $N_{\text{b}}$ is given by Table 6.4.1.4.3-1,

$$F_b(n_{\text{SRS}}) = \begin{cases} (N_b/2) \left\lfloor \dfrac{n_{\text{SRS}} \bmod \Pi_{b'=b_{\text{hop}}}^{b} N_{b'}}{\Pi_{b'=b_{\text{hop}}}^{b-1} N_{b'}} \right\rfloor + \left\lfloor \dfrac{n_{\text{SRS}} \bmod \Pi_{b'=b_{\text{hop}}}^{b} N_{b'}}{2\Pi_{b'=b_{\text{hop}}}^{b-1} N_{b'}} \right\rfloor & \text{if } N_b \text{ even} \\ \lfloor N_b/2 \rfloor \lfloor n_{\text{SRS}} / \Pi_{b'=b_{\text{hop}}}^{b-1} N_{b'} \rfloor & \text{if } N_b \text{ odd} \end{cases}$$

and where $N_{b_{\text{hop}}} = 1$ regardless of the value of $N_{\text{b}}$. The quantity $n_{\text{SRS}}$ counts the number of SRS transmissions. For the case of an SRS resource configured as aperiodic by the higher-layer parameter *resourceType*, it is given by $n_{\text{SRS}} = \lfloor l'/R \rfloor$ within the slot in which the $N_{\text{symb}}^{\text{SRS}}$ symbol SRS resource is transmitted. The quantity $R \leq N_{\text{symb}}^{\text{SRS}}$ is the repetition factor given by the field *repetitionFactor* if configured, otherwise $R = N_{\text{symb}}^{\text{SRS}}$.

For the case of an SRS resource configured as periodic or semi-persistent by the higher-layer parameter *resourceType*, the SRS counter is given by

$$n_{\text{SRS}} = \left( \frac{N_{\text{slot}}^{\text{frame},\mu} n_{\text{f}} + n_{\text{s,f}}^{\mu} - T_{\text{offset}}}{T_{\text{SRS}}} \right) \cdot \left( \frac{N_{\text{symb}}^{\text{SRS}}}{R} \right) + \left\lfloor \frac{l'}{R} \right\rfloor$$

for slots that satisfy $\left( N_{\text{slot}}^{\text{frame},\mu} n_{\text{f}} + n_{\text{s,f}}^{\mu} - T_{\text{offset}} \right) \bmod T_{\text{SRS}} = 0$. The periodicity $T_{\text{SRS}}$ in slots and slot offset $T_{\text{offset}}$ are given in clause 6.4.1.4.4.

**Table 6.4.1.4.3-1: SRS bandwidth configuration.**

**(skip)**

**Table 6.4.1.4.3-2: The offset $k_{\text{offset}}^{l'}$ for SRS as a function of $K_{\text{TC}}$ and $l'$.**

| $K_{\text{TC}}$ | $k_{\text{offset}}^0, \ldots, k_{\text{offset}}^{N_{\text{symb}}^{\text{SRS}}-1}$ |
|---|---|

| | $N^{SRS}_{symb} = 1$ | $N^{SRS}_{symb} = 2$ | $N^{SRS}_{symb} = 4$ | $N^{SRS}_{symb} = 8$ | $N^{SRS}_{symb} = 12$ |
|---|---|---|---|---|---|
| 2 | 0 | 0,1 | 0,1,0,1 | - | - |
| 4 | - | 0, 2 | 0, 2, 1, 3 | 0, 2, 1, 3, 0, 2, 1, 3 | 0, 2, 1, 3, 0, 2, 1, 3, 0, 2, 1, 3 |
| 8 | - | - | 0, 4, 2, 6 | 0, 4, 2, 6, 1, 5, 3, 7 | 0, 4, 2, 6, 1, 5, 3, 7, 0, 4, 2, 6 |

**Table 6.4.1.4.3-3: The quantity $k_{hop}$ as a function of $\bar{k}_{hop}$.**

| $\bar{k}_{hop}$ | $k_{hop}$ | | |
|---|---|---|---|
| | $P_F = 1$ | $P_F = 2$ | $P_F = 4$ |
| 0 | 0 | 0 | 0 |
| 1 | - | 1 | 2 |
| 2 | - | - | 1 |
| 3 | - | - | 3 |

6.4.1.4.4          Sounding reference signal slot configuration

For an SRS resource configured as periodic or semi-persistent by the higher-layer parameter *resourceType*, a periodicity $T_{SRS}$ (in slots) and slot offset $T_{offset}$ are configured according to the higher-layer parameter *periodicityAndOffset-p* or *periodicityAndOffset-sp* in the *SRS-Resource* IE, or *periodicityAndOffset-p* or *periodicityAndOffset-sp* in the *SRS-PosResource* IE. Candidate slots in which the configured SRS resource may be used for SRS transmission are the slots satisfying

$$\left( N^{frame,\mu}_{slot} n_f + n^{\mu}_{s,f} - T_{offset} \right) \bmod T_{SRS} = 0$$

SRS is transmitted as described in clause 11.1 of [5, TS 38.213].

Problems of the Related Art

In the Release 18 MIMO SRS discussion, a discussion is scheduled to introduce 8-port SRS transmission. In the current standard, it is defined that SRS transmission of 1, 2 and 4 ports is possible and all ports can be transmitted within a single symbol. Among various port multiplexing methods, a method of applying N-symbol based TDM and/or TD-OCC may be considered. The following shows several examples.

      E.g.1, TDM between 0/1/2/3 port (e.g., symbol#x) and 4/5/6/7 port (e.g., symbol#x+1)
      E.g.2, TD-OCC between 0/1/2/3 port (e.g., symbol#x) and 4/5/6/7 port (e.g., symbol#x+1)

[Issue #1] When supporting the above TDM and/or TD-OCC, clarification is required in standard techniques for the following problems.

In the current 3GPP standard, the number of SRS symbols (i.e., nrofSymbols) within a slot can be set to a value of {1,2,4,8,10,12,14}, and the number of repeated transmissions (i.e., repetitionFactor) within the slot can be set to a value of {1,2,4,5,6,7,8,10,12,14}. If frequency hopping is configured, hopping can be performed in units of repetitionFactor (3GPP TS38.211, 6.4.1.4.3). And, the nrofSymbols and the repetitionFactor may be set to a combination that allows nrofSymbols/repetitionFactor to have an integer value. (3GPP TS38.214, 6.2.1.1)

If the frequency hopping is configured and the TDM/TD-OCC is performed based on consecutive N symbols, clarification is needed in the current standard technique on how repetitionFactor should be applied. For example, if the TDM/TD-OCC is performed based on 2 consecutive symbols for a combination of nrofSymbols=10 and repetitionFactor=5, hopping occurs between a 5th symbol and a 6th symbol, so a frequency domain to be transmitted may vary. Thus, the 2 symbols to which the TDM/TD-OCC is applied may be transmitted in different frequency domains. Therefore, in the case of applying the TDM/TD-OCC even if the frequency hopping is performed, there is a need for a method capable of assuming the same frequency domain for consecutive N symbols to which the TDM/TD-OCC is applied.

[Issue #2] When supporting the (TDM and/or) TD-OCC, clarification is required in standard techniques for the following problems.

The current standard enables hopping in units of symbol for a root index of an SRS sequence (i.e., group-OrSequenceHopping) (TS38.211, 6.4.1.4.2). For groupHopping, hopping is possible within a set of 30 root indexes. For sequenceHopping, hopping is possible between sets in two sets of 30 root indexes (the root index in the set is fixed).

When the groupHopping or the sequenceHopping is configured and the (TDM/)TD-OCC is performed based on consecutive N symbols, clarification is needed as to whether hopping should be performed within a symbol interval to which the (TDM/)TD-OCC is applied. For example, when performing the group/sequence hopping, a base sequence may vary on a per symbol basis. Therefore, in the case of applying the TD-OCC even if the group/sequence hopping is performed, there is a need for a method capable of assuming the same base sequence for consecutive N symbols to which the TD-OCD is applied.

Configuration of various embodiments of the present disclosure

FIG. 6 illustrates an example of SRS transmission performing frequency hopping in a system applicable to the present disclosure.

Proposal #A1: (For the Issue #1) when applying TDM/TD-OCC for port multiplexing based on consecutive N symbols, a method of setting repetitionFactor corresponding to an integer multiple of the N, and a method of interpreting the number of actual repeated transmissions as repetitionFactorN.

In an example of FIG. 6, nrofSymbols=10 and repetitionFactor=5 were assumed. A frequency hopping operation may be performed at intervals of 5 symbols based on the current standard. In this case, if the TDM/TD-OCC based on 2 symbols is applied, frequency hopping may occur in symbol #8 and symbol #9, and different ports multiplexed based on the TDM/TD-OCC may be transmitted in different frequency domains. Therefore, a problem may arise in estimating the correct channel. On the other hand, if the proposal #A1 is applied, the above situation can be prevented, thereby preventing the channel estimation performance from deteriorating.

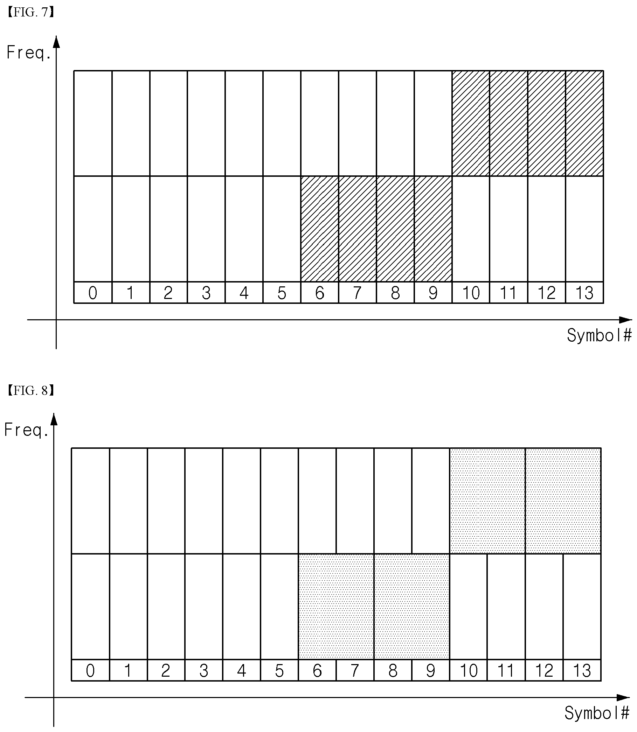

FIG. 7 illustrates an example of SRS transmission performing frequency hopping in a system applicable to the present disclosure. Specifically, FIG. 7 illustrates a method based on the current standard.

FIG. 8 illustrates an example of SRS transmission performing frequency hopping in a system applicable to the present disclosure. Specifically, FIG. 8 illustrates a proposed method based on the present disclosure.

In examples of FIGS. 7 and 8, nrofSymbols=8 and repetitionFactor=4 were assumed. As illustrated in FIG. 7, based on the current standard, a pattern of a single symbol in which all ports are defined may be repeatedly transmitted in repetitionFactor=4 times, and a frequency hopping operation may be performed at intervals of 4 symbols. On the other hand, as illustrated in FIG. 8, based on the proposed method, a pattern of 2 symbols in which all ports are defined may be repeatedly transmitted in repetitionFactor/N=2 times, and a frequency hopping operation may be performed at intervals of repetitionFactor=4 symbols.

With the technical effect of the method of FIG. 8 according to the proposal #A1, it is possible to define an integer number of N symbols bound by port multiplexing within the repetitionFactor. Therefore, even if the frequency hopping is performed, the N symbols may be transmitted in the same frequency domain.

The following proposed method may be applied in addition to the proposal #A1 or in place of a part of the proposal #A1.

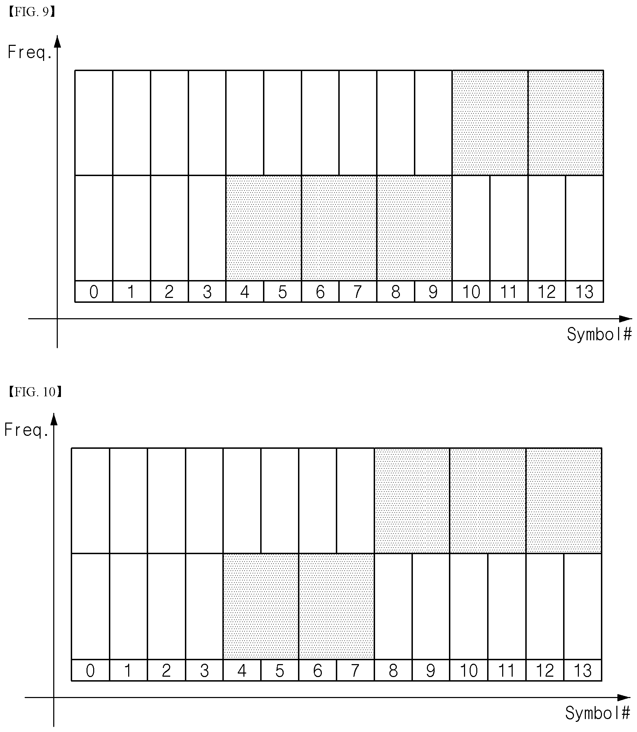

FIG. 9 illustrates an example of SRS transmission performing frequency hopping in a system applicable to the present disclosure. Specifically, FIG. 9 illustrates a first proposed method to which the following proposal #A1-a is applied.

FIG. 10 illustrates an example of SRS transmission performing frequency hopping in a system applicable to the present disclosure. Specifically, FIG. 10 illustrates a second proposed method to which the following proposal #A1-a is applied.

Proposal #A1-a: When TDM/TD-OCC for port multiplexing is applied based on consecutive N symbols, and repetitionFactor/N has a remainder, a method of interpreting the number of actual repeated transmissions as floor(repetitionFactor/N) and/or floor(repetitionFactor/N)+1.

In examples of FIGS. 9 and 10, nrofSymbols=10 and repetitionFactor=5 were assumed. If the operation is performed based on the current standard, the hopping operation may be performed as illustrated in FIG. 8. Based on the proposed methods illustrated in FIGS. 9 and 10, a pattern of two symbols in which all ports are defined may be repeatedly transmitted in floor(repetitionFactor/N) and/or floor(repetitionFactor/N)+1 = 2 and/or 3 times, and the frequency hopping operation may be performed at intervals of N*floor(repetitionFactor/N) and/or N*floor(repetitionFactor/N)+1 = 4 and/or 6 symbols.

In the proposal #A1-a, "floor(repetitionFactor/N) and/or floor(repetitionFactor/N)+1" is a method for enabling N symbols, in which all ports are defined, to be transmitted in the same frequency domain even if the frequency hopping is performed, and does not limit the above proposed methods, and thus it is obvious that other formulas can be applied to apply the proposed methods.

With the technical effect of the methods of FIGS. 9 and 10 according to the proposal #A1-a, while maintaining the nrofSymbols concept defined in the current standard, the N symbols in which all ports are defined can be transmitted in the same frequency domain even when performing frequency hopping.

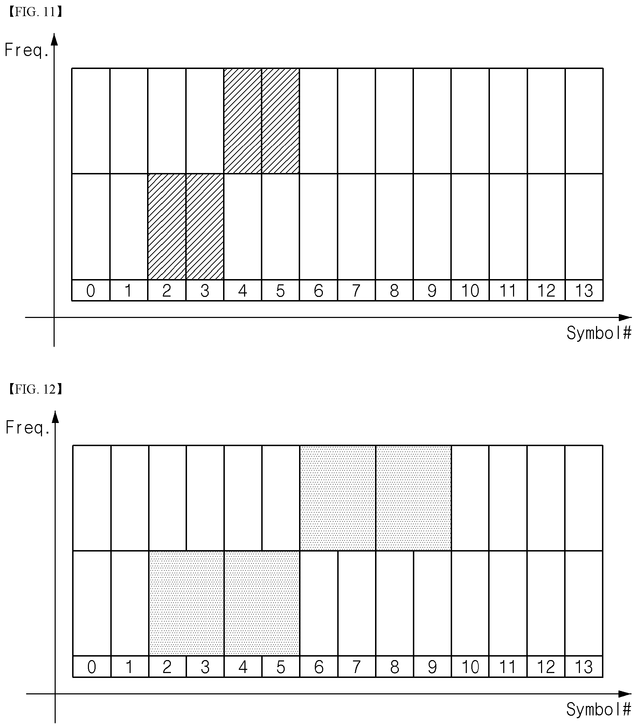

FIG. 11 illustrates an example of SRS transmission performing frequency hopping in a system applicable to the present disclosure. Specifically, FIG. 11 illustrates a method based on the current standard.

FIG. 12 illustrates an example of SRS transmission performing frequency hopping in a system applicable to the present disclosure. Specifically, FIG. 12 illustrates a proposed method to which the following proposal #A1-1 is applied.

Proposal #A1-1: When applying TDM/TD-OCC for port multiplexing based on consecutive N symbols, a method of interpreting the number of actual repeated transmissions for a pair of the N symbols as repetitionFactor, and a method of interpreting the number of actual SRS symbols (i.e., nrofSymbols) as nrofSymbols*N, and a method of configuring nrofSymbols*N<=14 and/or startPosition+1- nrofSymbols*N >=0.

In examples of FIGS. 11 and 12, nrofSymbols=4 and repetitionFactor=2 were assumed. As illustrated in FIG. 11, based on the current standard, a pattern of a single symbol in which all ports are defined may be repeatedly transmitted in repetitionFactor=2 times, and a total of four symbols may be transmitted within a slot. On the other hand, as illustrated in FIG. 12, based on the proposed method, a pattern of two symbols in which all ports are defined may be repeatedly transmitted in repetitionFactor=2 times, and a total of nrofSymbols*N=8 symbols may be transmitted within a slot.

In the proposal #A1-1, "nrofSymbols*N<=14 and/or startPosition+1- nrofSymbols*N >=0" is a method for enabling all the SRS symbols defined based on the proposed methods to be defined in a single slot and does not limit the above proposed methods, and thus it is obvious that other formulas can be applied to apply the proposed methods.

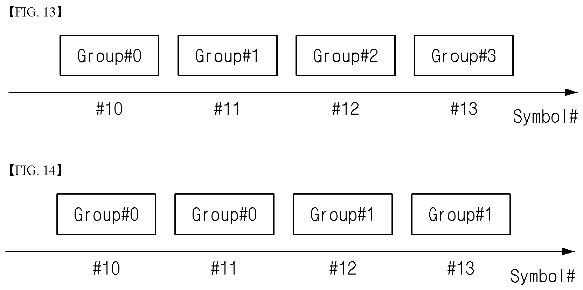

FIG. 13 illustrates an example of SRS transmission performing group/sequence hopping in a system applicable to the present disclosure. Specifically, FIG. 13 illustrates a method based on the current standard.

FIG. 14 illustrates an example of SRS transmission performing group/sequence hopping in a system applicable to the present disclosure. Specifically, FIG. 14 illustrates a proposed method to which the following proposal #A2 is applied.

Proposal #A2: (For the Issue #2) when applying (TDM/)TD-OCC for port multiplexing based on consecutive N symbols and performing group/sequence hopping, a method of performing the group/sequence hopping using a root index generated based on a specific symbol location within the N symbols.

In the above proposal, first/last/n-th symbol may be considered as an example of the "specific symbol location within the N symbols." The specific symbol location may be defined between a base station and a UE by a fixed rule, or may be configured/indicated to the UE with a specific value based on L1/L2 signaling. The specific symbol location may be an example for performing the group/sequence hopping in units of N symbols to which the (TDM/)TD-OCC is applied, and does not limit the proposed methods. Therefore, it is obvious that the group/sequence hopping can be performed in units of the N symbols based on another index to apply the proposed methods. For example, it may be defined to perform the group/sequence hopping based on a certain index defined in units of the N symbols.

In examples of FIGS. 13 and 14, nrofSymbols=4 and the group hopping were assumed. As illustrated in FIG. 13, based on the current standard, a group hopping operation may be performed on each symbol. On the other hand, as illustrated in FIG. 14, based on the proposed method, the group hopping operation may be performed based on a first symbol location in the N symbols. In this case, the same group may be applied within the N symbols.

A base sequence of the same root index may be maintained within the N symbols bound by the port multiplexing. That is, in the current standard, the operation of performing the group/sequence hopping for each symbol may be performed in units of the N symbols to which the (TDM/)TD-OCC is applied through the proposal #A2.

The above proposed methods (e.g., the proposal #A1/#A-a/#A1-1/#A2, etc.) may be applied independently and/or in combination. If the proposed methods are applied in combination, signaling (e.g., L1/L2 signaling) for configuring/indicating a specific method may be introduced.

Signaling procedure of various embodiments of the present disclosure

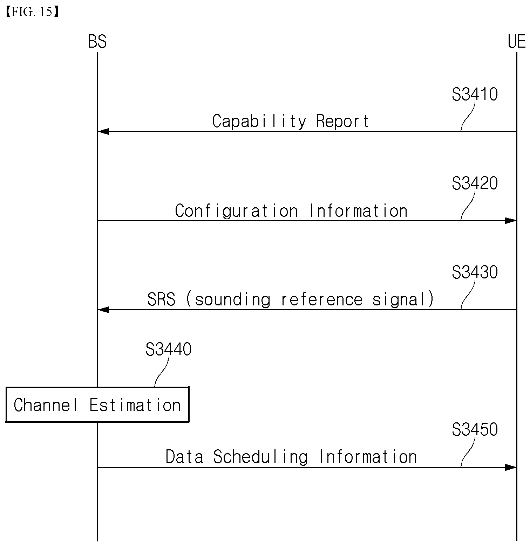

FIG. 15 illustrates a signal flowchart between a UE and a base station in a system applicable to the present disclosure.

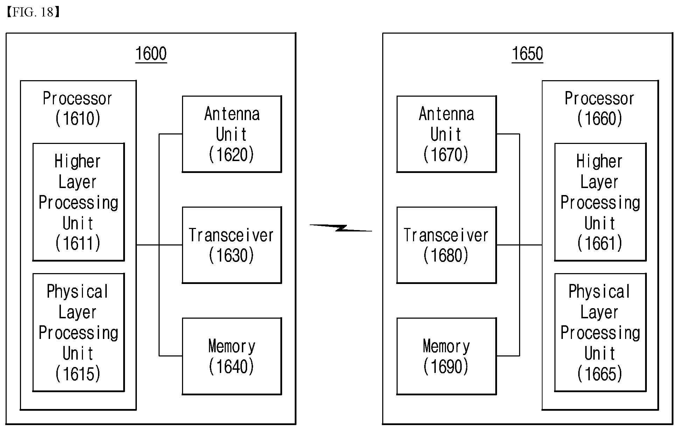

More specifically, FIG. 15 illustrates signaling between a base station (BS) and a user equipment (UE) to which the proposed methods (e.g., the proposals #A1/#A1-a/#A1-1/#A2, etc.) in the present disclosure can be applied (where the UE/BS is merely an example and can be replaced by various devices to be described below with reference to FIG. 18). FIG. 15 is merely for convenience of description and does not limit a scope of the present disclosure. Further, some step(s) illustrated in FIG. 15 may be omitted depending on situation and/or setting, etc. In addition, it is obvious that order of some step(s) illustrated in FIG. 15 can be changed. In operations of the base station and the UE illustrated in FIG. 15, the above-described contents (e.g., SRS related operations, etc.) may be used/referenced.

The base station may mean a generic term for an object performing transmission and reception of data with the UE. For example, the base station may be a concept including one or more transmission points (TPs), one or more transmission and reception points (TRPs), etc. The TP and/or the TRP may include a panel, a transmission and reception unit, etc. of the base station. The "TRP" may be applied by being replaced by expressions such as a panel, an antenna array, a cell (e.g., macro cell/small cell/pico cell, etc.), a transmission point (TP), and a base station (e.g., gNB, etc.). As described above, the TRP may be divided according to information (e.g., index, ID) for a CORESET group (or CORESET pool). For example, if one UE is configured to perform transmission and reception with multiple TRPs (or cells), this may mean that multiple CORESET groups (or CORESET pools) are configured to the one UE. The above-described configuration for the CORESET groups (or CORESET pools) may be performed via higher layer signaling (e.g., RRC signaling, etc.).

The UE may report a UE capability report, for example, UE capability information related to the proposed methods (e.g., the proposals #A1/#A1-a/#A1-1/#A2, etc.) to the base station, in S3410.

The UE may receive configuration information related to the proposed methods (e.g., the proposals #A1/#A1-a/#A1-1/#A2, etc.) from the base station, in S3420. The configuration information may include all of configuration/indication based on L1/L2 signaling. And/or, if the configuration information is pre-defined/pre-configured, the corresponding relationship may be omitted.

For example, an operation in which the UE receives the configuration information from the base station in the S3420 may be implemented by a device of FIG. 18 to be described below.

For example, an operation in which the base station transmits the configuration information to the UE in the S3420 may be implemented by a device of FIG. 18 to be described below.

The UE may transmit a sounding reference signal (SRS) to the base station, in S3430. The UE may perform the SRS transmission operation based on the configuration information of the S3420. For example, the UE may perform the SRS transmission operation based on the proposed methods (e.g., the proposals #A1/#A1-a/#A1-1/#A2, etc.).

The base station may estimate DL/UL channel based on the SRS received from the UE, in S3440.

The base station may configure/indicate data scheduling information for the UE based on an estimation channel value, in S3450. The data scheduling information may be determined based on the DL/UL channel value estimated in S3440.

As described above, the above-described signaling and operation (e.g., the proposals #A1/#A1-a/#A1-1/#A2/-FIG. 15, etc.) between the base station and the UE may be implemented by a device (e.g., FIG. 18) to be described below. For example, the base station may correspond to a first device, and the UE may correspond to a second device, or vice versa.

For example, the above-described UE/BS signaling and operation (e.g., the proposals #A1/#A1-a/#A1-1/#A2/-FIG. 15, etc.) can be processed by one or more processors 1610 and 1670 of FIG. 18. Further, the above-described UE/BS signaling and operation (e.g., the proposals #A1/#A1-a/#A1-1/#A2/FIG. 15, etc.) can be stored in a memory (e.g., one or more memories 1640 and 1690 of FIG. 18) in the form of commands/programs (e.g., instructions, executable codes) for running one or more processors 1610 and 1670 of FIG. 18.

[Description of claims related to UE]

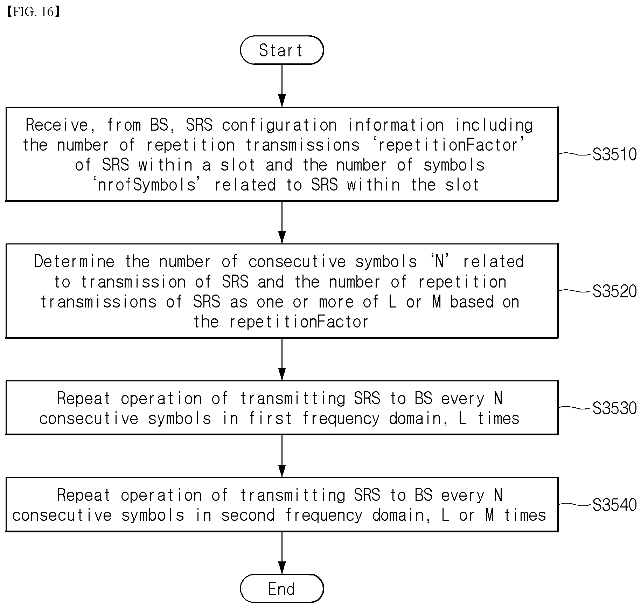

Below, the above-described embodiments are described in detail from a perspective of an operation of a UE with reference to FIG. 16. Methods to be described below are merely distinguished for convenience of explanation. Thus, as long as the methods are not mutually exclusive, it is obvious that partial configuration of any method can be substituted or combined with partial configuration of another method.

FIG. 16 illustrates an example of an operation process of a UE in a system applicable to the present disclosure.

In step S3510, a UE receives, from a base station (BS), SRS configuration information including a number of repeated transmissions 'repetitionFactor' of a sounding reference signal (SRS) within a slot and a number of symbols 'nrofSymbols' related to the SRS within the slot.

In step S3520, the UE determines a number of consecutive symbols 'N' related to a transmission of the SRS and a number of times for a repetition transmission of the SRS as one or more of L or M based on the repetitionFactor.

In step S3530, the UE repeats an operation of transmitting the SRS to the base station every N consecutive symbols in a first frequency domain, L times.

In step S3540, the UE repeats an operation of transmitting the SRS to the base station every N consecutive symbols in a second frequency domain, L or M times.

According to various embodiments of the present disclosure, the transmission of the SRS may be related to multiple antenna ports within the UE.

According to various embodiments of the present disclosure, time resource domains related to the multiple antenna ports may not overlap with each other and may be allocated within the N consecutive symbols.

According to various embodiments of the present disclosure, the L may be repetitionFactorN. After the SRS is transmitted L times in the first frequency domain, the SRS may be transmitted L times in the second frequency domain different from the first frequency domain in consecutive time domains.

According to various embodiments of the present disclosure, the L may be N*floor(repetitionFactor/N), and the M may be N*[floor(repetitionFactor/N)+1]. Alternatively, the L may be N*[floor(repetitionFactor/N)+1], and the M may be N*floor(repetitionFactor/N).

According to various embodiments of the present disclosure, the SRS may be transmitted in nrofSymbols symbols within the slot. A frequency hopping from the first frequency domain to the second frequency domain may be performed in a (N*L+1)th symbol among the nrofSymbols symbols.

According to various embodiments of the present disclosure, nrofSymbols*N <= 14 and startPosition+1-nrofSymbols*N >= 0. The startPosition may be a position of a symbol in which the L transmissions of the SRS in the first frequency domain start among 14 symbols within the slot.

According to various embodiments of the present disclosure, the L may be the repetitionFactor. After the SRS is transmitted L times in the first frequency domain, the SRS may be transmitted L times in the second frequency domain different from the first frequency domain in consecutive time domains.

According to various embodiments of the present disclosure, the SRS may be transmitted in nrofSymbols symbols within the slot. A group hopping or a sequence hopping may be performed in units of N symbols from a first symbol of the nrofSymbols symbols. A start point of the same frequency band sequence and the same frequency band pattern may be applied to a group of a plurality of UEs including the UE in the N symbols.

According to various embodiments of the present disclosure, there is provided a user equipment (UE) in a wireless communication system. The UE may include a transceiver and at least one processor, and the at least one processor may be configured to perform the operation method of the UE based on FIG. 16.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 16 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 16.

[Description of claims related to BS]

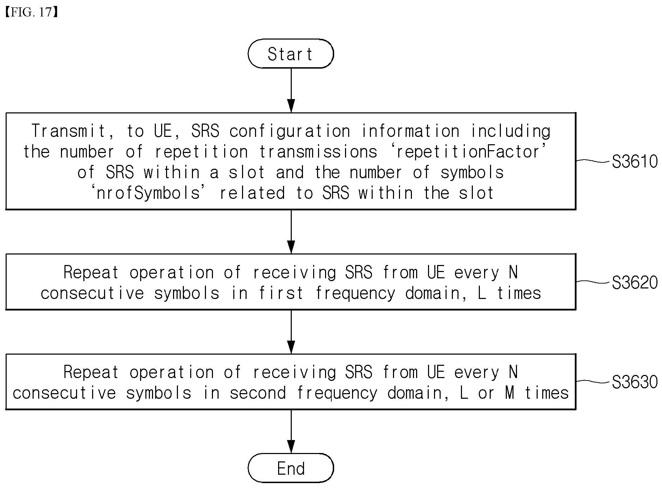

Below, the above-described embodiments are described in detail from a perspective of an operation of a base station with reference to FIG. 17. Methods to be described below are merely distinguished for convenience of explanation. Thus, as long as the methods are not mutually exclusive, it is obvious that partial configuration of any method can be substituted or combined with partial configuration of another method.

FIG. 17 illustrates an example of an operation process of a base station in a system applicable to the present disclosure.

In step S3610, a base station may transmit, to a UE, SRS configuration information including a number of repeated transmissions 'repetitionFactor' of a sounding reference signal (SRS) within a slot and a number of symbols 'nrofSymbols' related to the SRS within the slot.

In step S3620, the base station may repeat an operation of receiving the SRS from the UE every N consecutive symbols in a first frequency domain, L times.

In step S3630, the base station may repeat an operation of receiving the SRS from the UE every N consecutive symbols in a second frequency domain, L or M times.

According to various embodiments of the present disclosure, the N may be a number of consecutive symbols related to a transmission of the SRS.

According to various embodiments of the present disclosure, the L and the M may be a number of repeated transmissions of the SRS based on the repetitionFactor.

According to various embodiments of the present disclosure, a reception of the SRS may be related to multiple antenna ports within the base station.

According to various embodiments of the present disclosure, time resource domains related to the multiple antenna ports may not overlap with each other and may be allocated within the N consecutive symbols.

According to various embodiments of the present disclosure, the L may be repetitionFactorN. After the SRS is received L times in the first frequency domain, the SRS may be received L times in the second frequency domain different from the first frequency domain in consecutive time domains.

According to various embodiments of the present disclosure, the L may be N*floor(repetitionFactor/N), and the M may be N*[floor(repetitionFactor/N)+1]. Alternatively, the L may be N*[floor(repetitionFactor/N)+1], and the M may be N*floor(repetitionFactor/N).

According to various embodiments of the present disclosure, the SRS may be received in nrofSymbols symbols in the slot. A frequency hopping from the first frequency domain to the second frequency domain may be performed in a (N*L+1)th symbol among the nrofSymbols symbols.

According to various embodiments of the present disclosure, nrofSymbols*N <= 14 and startPosition+1-nrofSymbols*N >= 0. The startPosition may be a position of a symbol in which the L transmissions of the SRS in the first frequency domain start among 14 symbols within the slot.

According to various embodiments of the present disclosure, the L may be the repetitionFactor. After the SRS is received L times in the first frequency domain, the SRS may be received L times in the second frequency domain different from the first frequency domain in consecutive time domains.

According to various embodiments of the present disclosure, the SRS may be received in nrofSymbols symbols within the slot. A group hopping or a sequence hopping may be performed in units of N symbols from a first symbol of the nrofSymbols symbols. A start point of the same frequency band sequence and the same frequency band pattern may be applied to a group of a plurality of UEs including the UE in the N symbols.

According to various embodiments of the present disclosure, there is provided a base station in a wireless communication system. The base station may include a transceiver and at least one processor, and the at least one processor may be configured to perform the operation method of the BS based on FIG. 17.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 17 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 17.

Wireless device applicable to the present disclosure

Examples of wireless devices to which various embodiments of the present disclosure are applied are described below.

FIG. 18 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

The wireless communication technology implemented in the devices 1600 and 1650 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 1600 and 1650 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 1600 and 1650 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method of operating a user equipment (UE) in a wireless communication system, the method comprising:

   receiving, from a base station, sounding reference signal (SRS) configuration information including a number of repeated transmissions 'repetitionFactor' of an SRS within a slot and a number of symbols 'nrofSymbols' related to the SRS within the slot;
   determining a number of consecutive symbols 'N' related to a transmission of the SRS and a number of times for a repetition transmission of the SRS as one or more of L or M based on the repetitionFactor;
   repeating an operation of transmitting the SRS to the base station every N consecutive symbols in a first frequency domain, L times; and

repeating an operation of transmitting the SRS to the base station every N consecutive symbols in a second frequency domain, L or M times,
wherein the transmission of the SRS is related to multiple antenna ports within the UE, and
wherein time resource domains related to the multiple antenna ports do not overlap with each other and are allocated within the N consecutive symbols.

2. The method of claim 1, wherein the L is repetitionFactor/N, and
wherein after the SRS is transmitted L times in the first frequency domain, the SRS is transmitted L times in the second frequency domain different from the first frequency domain in consecutive time domains.

3. The method of claim 1, wherein the L is N*floor(repetitionFactor/N), and the M is N*[floor(repetitionFactor/N)+1], or wherein the L is N*[floor(repetitionFactor/N)+1], and the M is N*floor(repetitionFactor/N).

4. The method of claim 1, wherein the SRS is transmitted in nrofSymbols symbols within the slot, and
wherein a frequency hopping from the first frequency domain to the second frequency domain is performed in a (N*L+1)th symbol among the nrofSymbols symbols.

5. The method of claim 1, wherein nrofSymbols*N <= 14,

wherein startPosition+1-nrofSymbols*N >= 0, and
wherein the startPosition is a position of a symbol in which the L transmissions of the SRS in the first frequency domain start among 14 symbols within the slot.

6. The method of claim 5, wherein the L is repetitionFactor, and
wherein after the SRS is transmitted L times in the first frequency domain, the SRS is transmitted L times in the second frequency domain different from the first frequency domain in consecutive time domains.

7. The method of claim 1, wherein the SRS is transmitted in nrofSymbols symbols within the slot,

wherein a group hopping or a sequence hopping is performed in units of N symbols from a first symbol of the nrofSymbols symbols, and
wherein a start point of the same frequency band sequence and the same frequency band pattern are applied to a group of a plurality of UEs including the UE in the N symbols.

8. A method of operating a base station in a wireless communication system, the method comprising:

transmitting, to a user equipment (UE), sounding reference signal (SRS) configuration information including a number of repeated transmissions 'repetitionFactor' of an SRS within a slot and a number of symbols 'nrofSymbols' related to the SRS within the slot;
repeating an operation of receiving the SRS from the UE every N consecutive symbols in a first frequency domain, L times; and
repeating an operation of receiving the SRS from the UE every N consecutive symbols in a second frequency domain, L or M times,
wherein the N is a number of consecutive symbols related to a transmission of the SRS,
wherein the L and the M are a number of times for a repetition transmission of the SRS based on the repetitionFactor,
wherein a reception of the SRS is related to multiple antenna ports within the base station, and
wherein time resource domains related to the multiple antenna ports do not overlap with each other and are allocated within the N consecutive symbols.

9. The method of claim 8, wherein the L is repetitionFactor/N, and
wherein after the SRS is received L times in the first frequency domain, the SRS is received L times in the second frequency domain different from the first frequency domain in consecutive time domains.

10. The method of claim 8, wherein the L is N*floor(repetitionFactor/N), and the M is N*[floor(repetitionFactor/N)+1], or wherein the L is N*[floor(repetitionFactor/N)+1], and the M is N*floor(repetitionFactor/N).

11. The method of claim 8, wherein the SRS is received in nrofSymbols symbols within the slot, and

wherein a frequency hopping from the first frequency domain to the second frequency domain is performed in a (N*L+1)th symbol among the nrofSymbols symbols.

12. The method of claim 8, wherein nrofSymbols*N <= 14,

wherein startPosition+1-nrofSymbols*N >= 0, and
wherein the startPosition is a position of a symbol in which the L transmissions of the SRS in the first frequency domain start among 14 symbols within the slot.

13. The method of claim 12, wherein the L is repetitionFactor, and
wherein after the SRS is received L times in the first frequency domain, the SRS is received L times in the second frequency domain different from the first frequency domain in consecutive time domains.

14. The method of claim 8, wherein the SRS is received in nrofSymbols symbols within the slot,

wherein a group hopping or a sequence hopping is performed in units of N symbols from a first symbol of the nrofSymbols symbols, and
wherein a start point of the same frequency band sequence and the same frequency band pattern are applied to a group of a plurality of UEs including the UE in the N symbols.

15. A user equipment (UE) in a wireless communication system, the UE comprising:

a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station in a wireless communication system, the base station comprising:

a transceiver;
at least one processor; and
at least one memory operably connectable to the at least one processor and configured to store instructions performing operations based on being executed by the at least one processor,
wherein the operations comprise all steps of a method according to any one of claims 8 to 14.

17. A control device controlling a user equipment in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

**20.** One or more non-transitory computer readable mediums storing one or more instructions,

wherein the one or more instructions are configured to perform operations based on being executed by one or more processors, and
wherein the operations comprise all steps of a method according to any one of claims 8 to 14.

【FIG. 1】

INITIAL CELL
SEARCH

SYSTEM
INFORMATION
RECEPTION

RANDOM ACCESS PROCEDURE

GENERAL DL/UL Tx/Rx

| PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH |

S201          S202          S203    S204    S205    S206          S207    S208

· DL/UL ACK/NACK
· UE CQI/PMI RI REPORT
  USING PUSCH AND PUCCH

【FIG. 2】

BS Rx beam sweeping

SRS#0 Reception    SRS#1 Reception    SRS#N Reception    . . .

SRS #0. 1,...N

UE Tx beam (fixing)

BS Rx beam fixing

SRS#0    SRS#1

UE Tx beam sweeping

(a)                                                  (b)

【FIG. 3】

【FIG. 4】

【FIG. 5】

UE                                                                                    BS

                                                                        S2310
                                                        ┌─────────────────────┐
                                                        │  Uplink Scheduling  │
                                                        └─────────────────────┘

                                                                        S2320
        ◄────── DCI (PDCCH) for uplink scheduling ──────

                                                                        S2330
        ──────────── Uplink data (PUSCH) ──────────────►

【FIG. 6】

【FIG. 7】

【FIG. 8】

【FIG. 9】

【FIG. 10】

EP 4 513 811 A1

【FIG. 11】

【FIG. 12】

34

【FIG. 13】

| Group#0 | Group#1 | Group#2 | Group#3 |

#10   #11   #12   #13  Symbol#

【FIG. 14】

| Group#0 | Group#0 | Group#1 | Group#1 |

#10   #11   #12   #13  Symbol#

【FIG. 15】

【FIG. 16】

```
                        ╭─────────────╮
                        │    Start    │
                        ╰──────┬──────╯
                               │
                               ▼
┌──────────────────────────────────────────────────────┐
│ Receive, from BS, SRS configuration information        │
│ including the number of repetition transmissions       │
│ 'repetitionFactor' of SRS within a slot and the        │────S3510
│ number of symbols 'nrofSymbols' related to SRS         │
│ within the slot                                        │
└──────────────────────────┬─────────────────────────────┘
                           │
                           ▼
┌──────────────────────────────────────────────────────┐
│ Determine the number of consecutive symbols 'N'        │
│ related to transmission of SRS and the number of       │
│ repetition transmissions of SRS as one or more of      │────S3520
│ L or M based on the repetitionFactor                   │
└──────────────────────────┬─────────────────────────────┘
                           │
                           ▼
┌──────────────────────────────────────────────────────┐
│ Repeat operation of transmitting SRS to BS every N     │────S3530
│ consecutive symbols in first frequency domain, L times │
└──────────────────────────┬─────────────────────────────┘
                           │
                           ▼
┌──────────────────────────────────────────────────────┐
│ Repeat operation of transmitting SRS to BS every N     │────S3540
│ consecutive symbols in second frequency domain,        │
│ L or M times                                           │
└──────────────────────────┬─────────────────────────────┘
                           │
                           ▼
                    ╭─────────────╮
                    │     End     │
                    ╰─────────────╯
```

【FIG. 17】

```
                        ╭──────────╮
                        │  Start   │
                        ╰────┬─────╯
                             │
                             ▼
  ┌──────────────────────────────────────────────────────┐
  │ Transmit, to UE, SRS configuration information including│
  │ the number of repetition transmissions 'repetitionFactor'│──S3610
  │    of SRS within a slot and the number of symbols      │
  │    'nrofSymbols' related to SRS within the slot        │
  └──────────────────────────────────────────────────────┘
                             │
                             ▼
  ┌──────────────────────────────────────────────────────┐
  │    Repeat operation of receiving SRS from UE every N   │──S3620
  │    consecutive symbols in first frequency domain, L times│
  └──────────────────────────────────────────────────────┘
                             │
                             ▼
  ┌──────────────────────────────────────────────────────┐
  │    Repeat operation of receiving SRS from UE every N   │──S3630
  │ consecutive symbols in second frequency domain, L or M times│
  └──────────────────────────────────────────────────────┘
                             │
                             ▼
                        ╭──────────╮
                        │   End    │
                        ╰──────────╯
```

【FIG. 18】

## INTERNATIONAL SEARCH REPORT

| International application No. |
| --- |
| **PCT/KR2023/005318** |

**A.      CLASSIFICATION OF SUBJECT MATTER**

**H04L 5/00**(2006.01)i; **H04L 1/08**(2006.01)i; **H04B 7/0413**(2017.01)i; **H04B 7/06**(2006.01)i; **H04L 5/14**(2006.01)i

According to International Patent Classification (IPC) or to both national classification and IPC

**B.      FIELDS SEARCHED**

Minimum documentation searched (classification system followed by classification symbols)
H04L 5/00(2006.01); H04L 27/26(2006.01); H04W 72/04(2009.01)

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & keywords: SRS(sounding reference signal), 반복(repetition), 슬롯(slot), 오버랩(overlap)

**C.      DOCUMENTS CONSIDERED TO BE RELEVANT**

| Category* | Citation of document, with indication, where appropriate, of the relevant passages | Relevant to claim No. |
| --- | --- | --- |
| Y | US 11233609 B2 (HUAWEI TECHNOLOGIES CO., LTD.) 25 January 2022 (2022-01-25)<br>See column 18, lines 23-29 and column 33, lines 13-20; claim 1; and figures 2 and 18. | 1-20 |
| Y | CN 113810997 A (VIVO MOBILE COMMUNICATION CO., LTD.) 17 December 2021 (2021-12-17)<br>See paragraphs [0033]-[0035]; claims 17-18; and figure 1. | 1-20 |
| A | WO 2019-074267 A1 (LG ELECTRONICS INC.) 18 April 2019 (2019-04-18)<br>See paragraphs [0110]-[0116]; claim 1; and figure 9. | 1-20 |
| A | WO 2021-155586 A1 (QUALCOMM INCORPORATED) 12 August 2021 (2021-08-12)<br>See paragraphs [0167]-[0170]; claim 1; and figure 11. | 1-20 |
| A | US 2016-0338050 A1 (LG ELECTRONICS INC.) 17 November 2016 (2016-11-17)<br>See paragraphs [0216]-[0224]; claim 1; and figure 10. | 1-20 |

☐ Further documents are listed in the continuation of Box C.      ☑ See patent family annex.

| *    Special categories of cited documents: | "T"  later document published after the international filing date or priority date and not in conflict with the application but cited to understand the principle or theory underlying the invention |
| --- | --- |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **24 July 2023** | **24 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | | International application No.<br><br>**PCT/KR2023/005318** | | | |
|---|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| US | 11233609 | B2 | 25 January 2022 | BR | 112020009723 | A2 | 03 November 2020 |
| | | | | CN | 109802810 | A | 24 May 2019 |
| | | | | CN | 109802810 | B | 09 July 2021 |
| | | | | CN | 113660188 | A | 16 November 2021 |
| | | | | EP | 3713335 | A1 | 23 September 2020 |
| | | | | EP | 3713335 | A4 | 13 January 2021 |
| | | | | US | 2020-0280404 | A1 | 03 September 2020 |
| | | | | US | 2022-0209908 | A1 | 30 June 2022 |
| | | | | WO | 2019-096244 | A1 | 23 May 2019 |
| CN | 113810997 | A | 17 December 2021 | WO | 2021-249476 | A1 | 16 December 2021 |
| WO | 2019-074267 | A1 | 18 April 2019 | CN | 111480309 | A | 31 July 2020 |
| | | | | CN | 111480309 | B | 23 May 2023 |
| | | | | EP | 3687094 | A1 | 29 July 2020 |
| | | | | EP | 3687094 | A4 | 30 June 2021 |
| | | | | JP | 2020-537437 | A | 17 December 2020 |
| | | | | JP | 7146908 | B2 | 04 October 2022 |
| | | | | US | 10999032 | B2 | 04 May 2021 |
| | | | | US | 2020-0235881 | A1 | 23 July 2020 |
| | | | | US | 2021-0250145 | A1 | 12 August 2021 |
| WO | 2021-155586 | A1 | 12 August 2021 | CN | 115039369 | A | 09 September 2022 |
| | | | | EP | 4101111 | A1 | 14 December 2022 |
| | | | | US | 2023-0050730 | A1 | 16 February 2023 |
| | | | | WO | 2021-155818 | A1 | 12 August 2021 |
| US | 2016-0338050 | A1 | 17 November 2016 | CN | 105981316 | A | 28 September 2016 |
| | | | | CN | 105981316 | B | 06 July 2018 |
| | | | | EP | 3107229 | A1 | 21 December 2016 |
| | | | | EP | 3107229 | A4 | 04 October 2017 |
| | | | | EP | 3107229 | B1 | 16 June 2021 |
| | | | | JP | 2017-508355 | A | 23 March 2017 |
| | | | | JP | 6393764 | B2 | 19 September 2018 |
| | | | | KR | 10-1923454 | B1 | 27 February 2019 |
| | | | | KR | 10-2016-0119138 | A | 12 October 2016 |
| | | | | US | 10506585 | B2 | 10 December 2019 |
| | | | | WO | 2015-122723 | A1 | 20 August 2015 |

Form PCT/ISA/210 (patent family annex) (July 2022)